# EUROPEAN PATENT APPLICATION

(11) **EP 4 654 648 A1**
(43) Date of publication of application: **26.11.2025**
(21) Application number: 23921711.0
(22) Date of filing: 14.02.2023
(51) Int. Cl.: H04W 24/02

(54) **PROCESSING METHOD, COMMUNICATION DEVICE, AND STORAGE MEDIUM**

(71) Applicant: Shenzhen Transsion Holdings Co., Ltd., Shenzhen, Guangdong 518057 (CN)
(72) Inventor: WANG, Sha, Shenzhen, Guangdong 518057 (CN)
(74) Representative: Osterhoff, Utz
(86) International application number: PCT/CN2023/076012
(87) International publication number: WO 2024/168543

(57) **Abstract**

The present application provides a processing method, a communication device, and a storage medium. The processing method includes: determining whether to transmit uplink service data and/or reference signals, or whether to receive downlink service data and/or reference signals, according to first configuration information and/or second configuration information, which can reduce the energy consumption of the terminal device and/or the network device. For example, by adopting a method of aligning the discontinuous reception (DRX) mode of all UEs and/or aligning the DRX/DTX mode of the base station/cell where all UEs are located, the behavior of UE performing uplink transmission according to the configured resources during the inactive time of DRX can be reduced, thereby achieving better and more lasting energy saving of UE and/or base station.

## Description

### TECHNICAL FIELD

The present application relates to the technical field of communication, and in particular to a processing method, a communication device, and a storage medium.

### BACKGROUND

In the current specification, a base station configures connected-discontinuous reception (C-DRX) configuration information for a terminal through a dedicated Radio Resource Control (RRC) signaling.

During the process of conceiving and implementing the present application, the inventor found that there are at least the following problems: since the duration of the active time in C-DRX depends on scheduler size configured by the base station for each terminal, the inactive time of a certain UE's discontinuous reception (DRX) cycle may be the active time of another UE's DRX cycle, and the DRX configurations of different UEs are evenly distributed throughout the C-DRX cycle, which results in the base station having very limited available inactive time in the entire C-DRX cycle, resulting in relatively high the base station's energy consumption.

The preceding description is intended to provide general background information and does not necessarily constitute prior art.

### SUMMARY

The main purpose of the present application is to provide a processing method, a communication device and a storage medium, aiming to reduce the energy consumption of a network device and/or a terminal device.

The present application provides a processing method, which can be applied to a communication device (such as a mobile phone), including the following step:

S20, determining whether to transmit uplink service data and/or reference signals, or whether to receive downlink service data and/or reference signals, according to first configuration information and/or second configuration information.

Optionally, the second configuration information includes at least one of second discontinuous transmission and reception configuration information, second downlink discontinuous transmission configuration information, and second uplink discontinuous reception configuration information.

Optionally, different power states of a network device correspond to different or same second configuration information.

Optionally, the step S20 includes at least one of the following:
when the second configuration information is the second discontinuous transmission and reception configuration information, not transmitting or receiving service data and/or reference signals during inactive time of the second configuration information;
when the second configuration information is the second downlink discontinuous transmission configuration information, not receiving downlink service data and/or reference signals during the inactive time of the second configuration information; and
when the second configuration information is the second uplink discontinuous reception configuration information, not transmitting uplink service data and/or reference signals during the inactive time of the second configuration information.

Optionally, the method further includes at least one of the following:
a cycle of the second downlink discontinuous transmission configuration information is equal to a cycle of the second uplink discontinuous reception configuration information;
active time of the second uplink discontinuous reception configuration information includes uplink service transmission duration configured in the last downlink control information carrying uplink scheduling information within the second downlink discontinuous reception configuration information; and
a starting symbol position of the second downlink discontinuous transmission configuration information is aligned with a starting symbol position of the second uplink discontinuous reception configuration information.

Optionally, the method further includes at least one of the following:
at least one of a discontinuous reception cycle, a start offset of the discontinuous reception cycle and a slot offset of the discontinuous reception cycle in the first configuration information for different users is the same;
a starting symbol position of the terminal device's discontinuous reception cycle determined by the first configuration information is aligned with a starting symbol position of the network device's discontinuous transmission cycle determined by the second configuration information;
active time of the discontinuous reception cycle determined by the first configuration information for different users falls within a discontinuous transmission active time determined by the second configuration information;
a duration of the discontinuous reception cycle in the first configuration information for different users is longer than or equal to a duration of the discontinuous transmission cycle in the second configuration information;
at least one of a duration timer, inactivity timer, downlink hybrid automatic repeat request round trip timer, uplink hybrid automatic repeat request round trip timer, downlink retransmission timer, and uplink retransmission timer in the first configuration information for different users is different;
the first configuration information and/or the second configuration information are configured by an RRC message;
the first configuration information and the second configuration information are activated by the same DCI field;
the first configuration information and the second configuration information are activated by different DCI fields;
the first configuration information and the second configuration information are activated by the same MAC CE; and
the first configuration information and the second configuration information are activated by different MAC CEs.

The present application further provides a processing method, which can be applied to a communication device (such as a base station), including the following step:
S10, transmitting first configuration information and/or second configuration information, so that a terminal device determines whether to transmit uplink service data and/or reference signals, or whether to receive downlink service data and/or reference signals according to the first configuration information and/or second configuration information.

Optionally, the second configuration information includes at least one of second discontinuous transmission and reception configuration information, second downlink discontinuous transmission configuration information, and second uplink discontinuous reception configuration information.

Optionally, different power states correspond to different or same second configuration information.

Optionally, the method further includes at least one of the following:
a cycle of the second downlink discontinuous transmission configuration information is equal to a cycle of the second uplink discontinuous reception configuration information;
active time of the second uplink discontinuous reception configuration information includes uplink service transmission duration configured in the last downlink control information carrying uplink scheduling information within the second downlink discontinuous reception configuration information; and
a starting symbol position of the second downlink discontinuous transmission configuration information is aligned with a starting symbol position of the second uplink discontinuous reception configuration information.

Optionally, the method further includes at least one of the following:
at least one of a discontinuous reception cycle, a start offset of the discontinuous reception cycle and a slot offset of the discontinuous reception cycle in the first configuration information for different users is the same;
a starting symbol position of the terminal device's discontinuous reception cycle determined by the first configuration information is aligned with a starting symbol position of the network device's discontinuous transmission cycle determined by the second configuration information;
active time of the discontinuous reception cycle determined by the first configuration information for different users falls within a discontinuous transmission active time determined by the second configuration information;
a duration of the discontinuous reception cycle in the first configuration information for different users is longer than or equal to a duration of the discontinuous transmission cycle in the second configuration information;
at least one of a duration timer, inactivity timer, downlink hybrid automatic repeat request round trip timer, uplink hybrid automatic repeat request round trip timer, downlink retransmission timer, and uplink retransmission timer in the first configuration information for different users is different;
the first configuration information and/or the second configuration information are configured by an RRC message;
the first configuration information and the second configuration information are activated by the same DCI field;
the first configuration information and the second configuration information are activated by different DCI fields;
the first configuration information and the second configuration information are activated by the same MAC CE; and
the first configuration information and the second configuration information are activated by different MAC CEs.

The present application further provides a processing device, including:
a determination module, configured for determining whether to transmit uplink service data and/or reference signals, or whether to receive downlink service data and/or reference signals, according to first configuration information and/or second configuration information.

The present application further provides a processing device, including:
a transmitting module, configured for transmitting first configuration information and/or second configuration information, so that a terminal device determines whether to transmit uplink service data and/or reference signals, or whether to receive downlink service data and/or reference signals according to the first configuration information and/or second configuration information.

The present application further provides a communication device, including: a memory, a processor, and a processing program stored on the memory and executable on the processor, the processing program is executed by the processor to implement the processing method described in any of the above embodiments. The communication device mentioned in the present application may be a terminal device (such as a smart terminal, such as a mobile phone) or a network device (such as a base station), and the specific reference needs to be clarified in the context.

The present application further provides a storage medium, a computer program is stored on the storage medium, and the computer program is executed by the processor to implement the processing method described in any of the above embodiments.

According to the technical solution of the present application, the terminal device determines whether to transmit uplink service data and/or reference signals, or whether to receive downlink service data and/or reference signals according to the first configuration information and/or the second configuration information, which can solve the problem of uniform distribution of C-DRX active time for different UEs in the entire DRX cycle, and/or achieve the purpose of reducing the base station energy consumption to the maximum extent by further constraining the transmitting behavior of different UEs during inactive time.

### BRIEF DESCRIPTION OF THE DRAWINGS

The accompanying drawings, which are incorporated in and constitute a part of this specification, illustrate embodiments consistent with the present application and together with the description, serve to explain the principles of the present application. In order to explain the technical solutions of the embodiments of the present application more clearly, the drawings needed to be used in the description of the embodiments will be briefly introduced below. Obviously, for those of ordinary skill in the art, other drawings can be obtained based on these drawings without exerting creative efforts.
FIG. 1 is a schematic diagram of hardware structure of a mobile terminal that implements various embodiments of the present application.
FIG. 2 is a communication network system architecture diagram according to an embodiment of the present application.
FIG. 3 is a schematic diagram of hardware structure of a controller 140 involved in a control method embodiment of the present application.
FIG. 4 is a schematic diagram of hardware structure of a network node 150 involved in the control method embodiment of the present application.
FIG. 5 is a schematic diagram of an interaction process between a terminal device and a network device in a first embodiment of the control method of the present application.
FIG. 6 is a schematic diagram of the interaction process between the terminal device and the network device in a second embodiment of the control method of the present application;
FIG. 7 is a schematic diagram of scene implementation of the second embodiment of the processing method of the present application.
FIG. 8 is a schematic diagram of scene implementation of a third embodiment of the processing method of the present application.
FIG. 9 is a schematic diagram of the interaction process between the terminal device and the network device in a fourth embodiment of the control method of the present application.
FIG. 10 is a schematic diagram of scene implementation of the fourth embodiment of the processing method of the present application.
FIG. 11 is a schematic diagram of the interaction process between the terminal device and the network device in a fifth embodiment of the control method of the present application.
FIG. 12 is a schematic diagram of scene implementation of the fifth embodiment of the processing method of the present application.
FIG. 13 is a schematic diagram of the interaction process between the terminal device and the network device in a sixth embodiment of the control method of the present application.
FIG. 14 is a schematic diagram of the scene implementation of the sixth embodiment of the processing method of the present application.
FIG. 15 is a schematic diagram of the interaction process between the terminal device and the network device in a ninth embodiment of the control method of the present application.
FIG. 16 is a schematic diagram of the interaction process between the terminal device and the network device in a tenth embodiment of the control method of the present application.

The realization of the purpose, functional features and advantages of the present application will be further described in conjunction with the embodiments and with reference to the accompanying drawings. The above-mentioned drawings have shown clear embodiments of the present application, which will be described in more detail later. These drawings and textual descriptions are not intended to limit the scope of the concept of the present application in any way, but to illustrate the concept of the present application to those skilled in the art by referring to specific embodiments.

### DETAILED DESCRIPTION OF THE EMBODIMENTS

Exemplary embodiments will be described in detail herein, examples of which are illustrated in the accompanying drawings. When the following description refers to the drawings, unless otherwise indicated, the same numbers in different drawings refer to the same or similar elements. The implementations described in the following exemplary embodiments do not represent all implementations consistent with the present application. Rather, they are merely examples of apparatus and methods consistent with aspects of the present application as detailed in the appended claims.

It should be noted that in this document, the terms "comprise", "include" or any other variants thereof are intended to cover a non-exclusive inclusion. Thus, a process, method, article, or system that includes a series of elements not only includes those elements, but also includes other elements that are not explicitly listed, or also includes elements inherent to the process, method, article, or system. If there are no more restrictions, the element defined by the sentence "including a..." does not exclude the existence of other identical elements in the process, method, article or system that includes the element. In addition, components, features, and elements with the same name in different embodiments of the present application may have the same or different meanings. Its specific meaning needs to be determined according to its explanation in the specific embodiment or further combined with the context in the specific embodiment.

It should be understood that although the terms first, second, third, etc. may be used herein to describe various information, the information should not be limited to these terms. These terms are only used to distinguish information of the same type from one another. For example, without departing from the scope of this document, first information may also be called second information, and similarly, second information may also be called first information. Depending on the context, the word "if" as used herein may be interpreted as "at" or "when" or "in response to a determination". Furthermore, as used herein, the singular forms "a", "an" and "the" are intended to include the plural forms as well, unless the context indicates otherwise. It should be further understood that the terms "comprising", "including" indicate the existence of features, steps, operations, elements, components, items, species, and/or groups, but does not exclude the existence, occurrence or addition of one or more other features, steps, operations, elements, components, items, species, and/or groups. The terms "or", "and/or", "comprising at least one of" and the like used in the present application may be interpreted as inclusive, or mean any one or any combination. For example, "comprising at least one of: A, B, C" means "any of: A; B; C; A and B; A and C; B and C; A and B and C". As another example, "A, B, or C" or "A, B, and/or C" means "any of the following: A; B; C; A and B; A and C; B and C; A and B and C". Exceptions to this definition will only arise when combinations of elements, functions, steps or operations are inherently mutually exclusive in some way.

It should be understood that although the various steps in the flowchart in the embodiment of the present application are displayed sequentially as indicated by the arrows, these steps are not necessarily executed sequentially in the order indicated by the arrows. Unless otherwise specified herein, there is no strict order restriction on the execution of these steps, and they can be executed in other orders. Moreover, at least some of the steps in the figure may include multiple sub-steps or multiple stages, these sub-steps or stages are not necessarily executed at the same time, but can be executed at different times. The execution sequence thereof is not necessarily performed sequentially, but may be performed alternately or alternately with at least one part of other steps or sub-steps or stages of other steps.

Depending on the context, the words "if" as used herein may be interpreted as "at" or "when" or "in response to determining" or "in response to detecting". Similarly, depending on the context, the phrases "if determined" or "if detected (the stated condition or event)" could be interpreted as "when determined" or "in response to the determination" or "when detected (the stated condition or event)" or "in response to detection (the stated condition or event)".

It should be noted that in this article, step codes such as S10 and S20 are used for the purpose of expressing the corresponding content more clearly and concisely, and do not constitute a substantial limitation on the sequence. When implementing the step, those skilled in the art may execute S20 first and then S10, etc., but these should all fall within the scope of the present application.

It should be understood that the specific embodiments described here are only used to explain the present application, and are not intended to limit the present application.

In the following description, the use of suffixes such as "module", "part" or "unit" for denoting elements is only for facilitating the description of the present application and has no specific meaning by itself. Therefore, "module", "part" or "unit" may be used in combination.

The communication device mentioned in the present application can be a terminal device (such as a mobile terminal, specifically a mobile phone) or a network device (such as a base station). The specific reference needs to be clarified in the context. The terminal device can be implemented in various forms. For example, the terminal device described in the present application can include a mobile phone, a tablet computer, a notepad computer, a hand-held computer, a personal digital assistants (PDA), a portable media player (PMP), a navigation device, a wearable device, a smart bracelet, a pedometer and other terminal devices, as well as a fixed terminal device such as a digital TV and a desktop computer.

The present application takes a mobile terminal as an example to illustrate. Those skilled in the art will understand that, in addition to elements specifically used for mobile purposes, the configuration according to the embodiments of the present application can also be applied to the fixed terminal device.

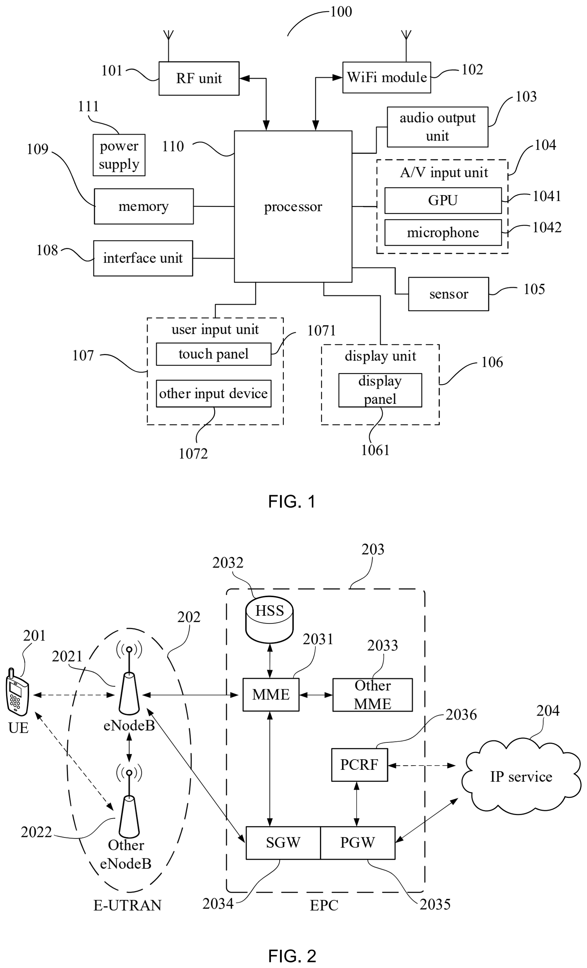

As shown in FIG. 1, FIG. 1 is a schematic structural diagram of a hardware of a mobile terminal that implements various embodiments of the present application. The mobile terminal 100 can include a Radio Frequency (RF) unit 101, a WiFi module 102, an audio output unit 103, an audio/video (A/V) input unit 104, a sensor 105, a display unit 106, a user input unit 107, an interface unit 108, a memory 109, a processor 110, a power supply 111 and other components. Those skilled in the art can understand that the structure of the mobile terminal shown in FIG. 1 does not constitute a limitation on the mobile terminal. The mobile terminal can include more or fewer components, or a combination of some components, or differently arranged components than shown in the figure.

Hereinafter, each component of the mobile terminal will be specifically introduced with reference to FIG. 1.

The radio frequency unit 101 can be used for transmitting and receiving signals during the process of transceiving information or talking. Specifically, after receiving the downlink information of the base station, the downlink information is processed by the processor 110; in addition, the uplink data is sent to the base station. Generally, the radio frequency unit 101 includes, but is not limited to, an antenna, at least one amplifier, a transceiver, a coupler, a low noise amplifier, a duplexer, and the like. In addition, the radio frequency unit 101 can also communicate with the network and other devices through wireless communication. The above-mentioned wireless communication can use any communication standard or protocol, including but not limited to Global System of Mobile communication (GSM), General Packet Radio Service (GPRS), Code Division Multiple Access 2000 (CDMA2000), Wideband Code Division Multiple Access (WCDMA), Time Division-Synchronous Code Division Multiple Access (TD-SCDMA), Frequency Division Duplexing-Long Term Evolution (FDD-LTE), Time Division Duplexing-Long Term Evolution (TDD-LTE), and 5G, or the like.

Wi-Fi is a short-range wireless transmission technology. The mobile terminal can help users transmit and receive email, browse webpage, and access streaming media through the Wi-Fi module 102, and Wi-Fi provides users with wireless broadband Internet access. Although FIG. 1 shows the Wi-Fi module 102, it is understandable that it is not a necessary component of the mobile terminal and can be omitted as needed without changing the essence of the present application.

When the mobile terminal 100 is in a call signal receiving mode, a call mode, a denoting mode, a voice recognition mode, a broadcast receiving mode, or the like, the audio output unit 103 can convert the audio data received by the radio frequency unit 101 or the Wi-Fi module 102 or stored in the memory 109 into an audio signal and output the audio signal as sound. Moreover, the audio output unit 103 can also provide audio output related to a specific function performed by the mobile terminal 100 (for example, call signal reception sound, message reception sound, or the like). The audio output unit 103 can include a speaker, a buzzer, or the like.

The A/V input unit 104 is configured to receive audio or video signals. The A/V input unit 104 can include a graphics processing unit (GPU) 1041 and a microphone 1042. The graphics processing unit 1041 processes image data of still pictures or videos obtained by an image capture device (such as a camera) in a video capture mode or an image capture mode. The processed image frame can be displayed on the display unit 106. The image frame processed by the graphics processing unit 1041 can be stored in the memory 109 (or other storage medium) or sent via the radio frequency unit 101 or the Wi-Fi module 102. The microphone 1042 can receive sound (audio data) in operation modes such as a call mode, a denoting mode, a voice recognition mode, and the like, and can process such sound into audio data. The processed audio (voice) data can be converted into a format that can be sent to a mobile communication base station via the radio frequency unit 101 in the case of a call mode for output. The microphone 1042 can implement various types of noise cancellation (or suppression) algorithms to eliminate (or suppress) noise or interference generated during the process of transceiving audio signals.

The mobile terminal 100 also includes at least one sensor 105, such as a light sensor, a motion sensor, and other sensors. Specifically, the light sensor includes an ambient light sensor and a proximity sensor. The ambient light sensor can adjust the brightness of the display panel 1061 according to the brightness of the ambient light. The proximity sensor can turn off the display panel 1061 and/or the backlight when the mobile terminal 100 is moved to the ear. A gravity acceleration sensor, as a kind of motion sensor, can detect the magnitude of acceleration in various directions (usually three axes). The gravity acceleration sensor can detect the magnitude and direction of gravity when it is stationary, and can identify the gesture of the mobile terminal (such as horizontal and vertical screen switch, related games, magnetometer attitude calibration), vibration recognition related functions (such as pedometer, tap), or the like. The mobile terminal can also be equipped with other sensors such as a fingerprint sensor, a pressure sensor, an iris sensor, a molecular sensor, a gyroscope, a barometer, a hygrometer, a thermometer, an infrared sensor and other sensors, which will not be repeated herein.

The display unit 106 is configured to display information input by the user or information provided to the user. The display unit 106 can include a display panel 1061, and the display panel 1061 can be configured in the form of a liquid crystal display (LCD), an organic light emitting diode (OLED), or the like.

The user input unit 107 can be configured to receive inputted numeric or character information, and generate key signal input related to user settings and function control of the mobile terminal. Specifically, the user input unit 107 can include a touch panel 1071 and other input devices 1072. The touch panel 1071, also called a touch screen, can collect user touch operations on or near it (for example, the user uses fingers, stylus and other suitable objects or accessories to operate on the touch panel 1071 or near the touch panel 1071), and drive the corresponding connection device according to a preset program. The touch panel 1071 can include two parts: a touch detection device and a touch controller. The touch detection device detects the user's touch position, detects the signal brought by the touch operation, and transmits the signal to the touch controller. The touch controller receives the touch information from the touch detection device, converts the touch information into contact coordinates, and transmits it to the processor 110, and can receive and execute the instructions sent by the processor 110. In addition, the touch panel 1071 can be implemented in multiple types such as resistive, capacitive, infrared, and surface acoustic wave. In addition to the touch panel 1071, the user input unit 107 can also include other input devices 1072. Specifically, the other input devices 1072 can include, but are not limited to, one or more of physical keyboard, function keys (such as volume control buttons, switch buttons, etc.), trackball, mouse, joystick, etc., which are not specifically limited here.

Further, the touch panel 1071 can cover the display panel 1061. After the touch panel 1071 detects a touch operation on or near it, the touch operation is transmitted to the processor 110 to determine the type of the touch event, and then the processor 110 provides a corresponding visual output on the display panel 1061 according to the type of the touch event. Although in FIG. 1, the touch panel 1071 and the display panel 1061 are used as two independent components to realize the input and output functions of the mobile terminal, in some embodiments, the touch panel 1071 and the display panel 1061 can be integrated to implement the input and output functions of the mobile terminal, which is not specifically limited here.

The interface unit 108 serves as an interface through which at least one external device can be connected to the mobile terminal 100. For example, the external device can include a wired or wireless earphone port, an external power source (or battery charger) port, a wired or wireless data port, a memory card port, a port for connecting devices with identification modules, an audio input/output (I/O) port, a video I/O port, an earphone port, or the like. The interface unit 108 can be configured to receive input (such as data information, electricity, or the like) from an external device and transmit the received input to one or more elements in the mobile terminal 100 or can be configured to transfer data between the mobile terminal 100 and the external device.

The memory 109 can be configured to store software programs and various data. The memory 109 can mainly include a program storage area and a data storage area. The program storage area can store the operating system, at least one application required by the function (such as sound play function, image play function, etc.), or the like. The data storage area can store data (such as audio data, phone book, etc.) created based on the use of the mobile phone. In addition, the memory 109 can include a high-speed random access memory, and can also include a non-volatile memory, such as at least one magnetic disk storage device, a flash memory device, or other volatile solid-state storage devices.

The processor 110 is a control center of the mobile terminal, and uses various interfaces and lines to connect the various parts of the entire mobile terminal. By running or performing the software programs and/or modules stored in the memory 109, and calling the data stored in the memory 109, various functions and processing data of the mobile terminal are executed, thereby overall monitoring of the mobile terminal is performed. The processor 110 can include one or more processing units; and the processor 110 may integrate an application processor and a modem processor. The application processor mainly processes an operating system, a user interface, an application, or the like, and the modem processor mainly processes wireless communication. It can be understood that the foregoing modem processor may not be integrated into the processor 110.

The mobile terminal 100 can also include a power source 111 (such as a battery) for supplying power to various components. The power supply 111 can be logically connected to the processor 110 through a power management system, so that functions such as charging, discharging, and power consumption management can be managed through the power management system.

Although not shown in FIG. 1, the mobile terminal 100 can also include a Bluetooth module, or the like, which will not be repeated herein.

In order to facilitate the understanding of the embodiments of the present application, the following describes the communication network system on which the mobile terminal of the present application is based.

As shown in FIG. 2, FIG. 2 is a communication network system architecture diagram according to an embodiment of the present application. The communication network system is an LTE system of general mobile communication network technology. The LTE system includes a User Equipment (UE) 201, an Evolved UMTS Terrestrial Radio Access Network (E-UTRAN) 202, an Evolved Packet Core (EPC) 203, and an operator's IP service 204 that are sequentially connected in communication.

Optionally, the UE 201 can be the aforementioned terminal 100, which will not be repeated here.

E-UTRAN 202 includes eNodeB 2021 and other eNodeBs 2022. The eNodeB 2021 can be connected to other eNodeBs 2022 through a backhaul (for example, an X2 interface), the eNodeB 2021 is connected to the EPC 203, and the eNodeB 2021 can provide access from the UE 201 to the EPC 203.

The EPC 203 can include Mobility Management Entity (MME) 2031, Home Subscriber Server (HSS) 2032, other MMEs 2033, Serving Gate Way (SGW) 2034, PDN Gate Way (PGW) 2035, Policy and Charging Rules Function (PCRF) 2036, and so on. MME 2031 is a control node that processes signaling between UE 201 and EPC 203, and provides bearer and connection management. HSS 2032 is configured to provide some registers to manage functions such as the home location register (not shown), and save some user-specific information about service feature, data rates, and so on. All user data can be sent through SGW 2034, PGW 2035 can provide UE 201 IP address allocation and other functions. PCRF 2036 is a policy and charging control policy decision point for service data flows and IP bearer resources, which selects and provides available policy and charging control decisions for policy and charging execution functional units (not shown).

The IP service 204 can include Internet, intranet, IP Multimedia Subsystem (IMS), or other IP services.

Although the LTE system is described above as an example, those skilled in the art should know that, the present application is not only applicable to the LTE system, but also applicable to other wireless communication systems, such as GSM, CDMA2000, WCDMA, TD-SCDMA, 5G and new network systems in the future (such as 6G), or the like, which is not limited herein.

Based on the above-mentioned mobile terminal hardware structure and communication network system, various embodiments of the present application are proposed.

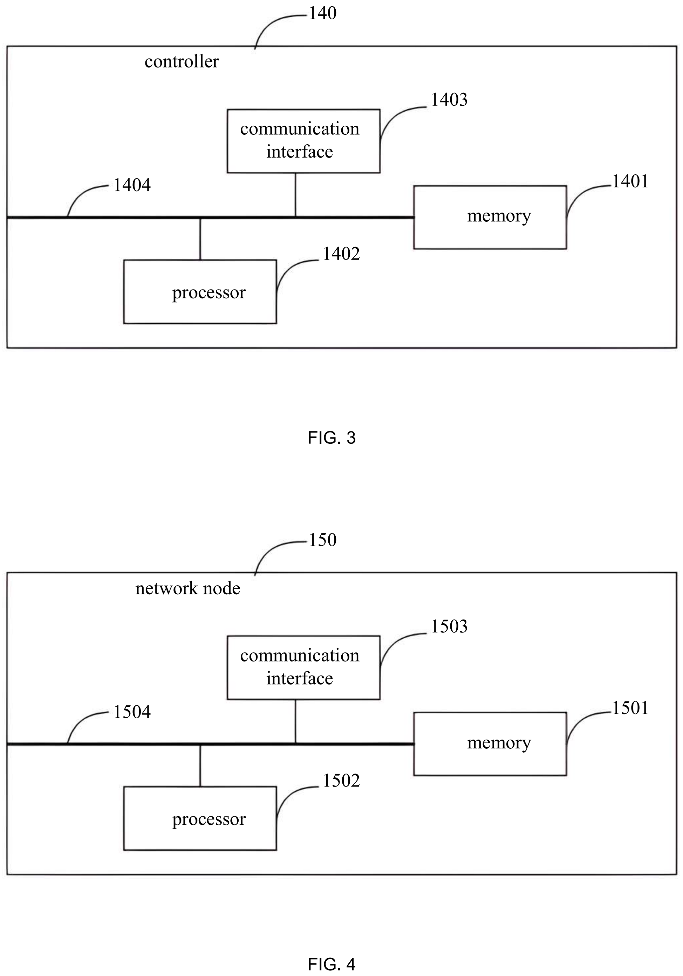

FIG. 3 is a schematic diagram of hardware structure of a controller 140 provided in the present application. The controller 140 includes a memory 1401 and a processor 1402, the memory 1401 is configured to store program instructions, and the processor 1402 is configured to call the program instructions in the memory 1401 to execute the steps performed by the controller in the first embodiment of the above-mentioned method. The implementation principle and beneficial effects are similar and will not be repeated here.

Optionally, the above-mentioned controller also includes a communication interface 1403, which can be connected to the processor 1402 through a bus 1404. The processor 1402 can control the communication interface 1403 to realize the receiving and transmiting functions of the controller 140.

FIG. 4 is a schematic diagram of hardware structure of a network node 150 provided in the present application. The network node 150 includes a memory 1501 and a processor 1502. The memory 1501 is configured to store program instructions, and the processor 1502 is configured to call the program instructions in the memory 1501 to execute the steps performed by the first node in the first embodiment of the above method. The implementation principle and beneficial effects are similar and will not be repeated here.

Optionally, the above controller further includes a communication interface 1503, which can be connected to the processor 1502 through a bus 1504. The processor 1502 can control the communication interface 1503 to implement the receiving and transmiting functions of the network node 150.

The above-mentioned integrated module implemented in the form of a software function module can be stored in a computer-readable storage medium. The above-mentioned software function module is stored in a storage medium, including several instructions for enabling a computer device (which can be a personal computer, a server, or a network device, etc.) or a processor to perform some steps of the methods of various embodiments of the present application.

The technical terms involved in the embodiments of the present application are as follows:
DCP: DCI with CRC scrambled by PS-RNTI;
DRX: Discontinuous Reception;
DTX: Discontinuous Transmission;
C-DRX: Connected-Discontinuous Reception;
Cell DTX: Cell Discontinuous Transmission;
RRC: Radio Resource Control.

The embodiment of the present application takes into account that: in the current specification, the base station configures the connected-discontinuous reception configuration for the terminal through specific radio resource control signaling. Since the active time length of C-DRX depends on the size of the scheduler configured by the base station for each terminal, the inactive time in the discontinuous reception cycle of a certain UE may be the active time of another UE's DRX cycle, and the DRX configurations of different UEs are evenly distributed in the entire C-DRX cycle, which results in very limited inactive time available for the base station in the entire C-DRX cycle, resulting in relatively high the base station's energy consumption.

Based on this, the solution proposed in the embodiment of the present application can solve the problem of uniform distribution of C-DRX active time of different UEs in the entire DRX cycle, and/or achieve the purpose of minimizing base station's power consumption by further constraining the transmission behavior of different UEs during inactive time.

### First embodiment

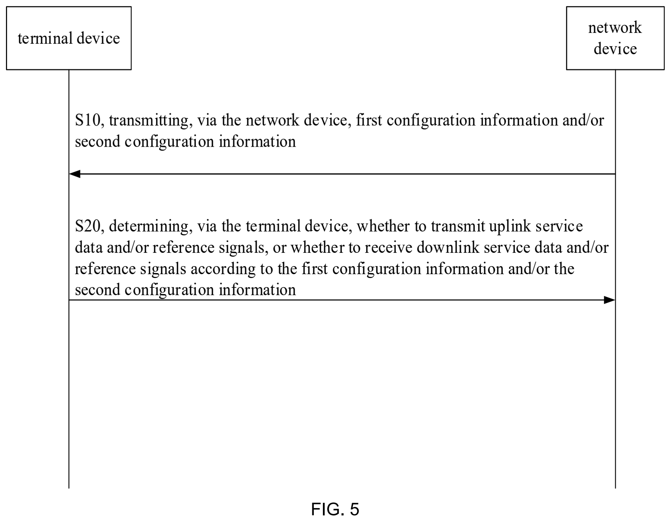

As shown in FIG. 5, the first embodiment of the present application provides a processing method, including the following steps:
S10, transmitting, via a network device, first configuration information and/or second configuration information;
S20, determining, via a terminal device, whether to transmit uplink service data and/or reference signals, or whether to receive downlink service data and/or reference signals according to the first configuration information and/or the second configuration information.

In technical solutions of the present application, the terminal device determines whether to transmit uplink service data and/or reference signals, or whether to receive downlink service data and/or reference signals according to the first configuration information and/or the second configuration information, which can solve the problem of uniform distribution of C-DRX active time of different UEs in the entire DRX cycle, and/or achieve the purpose of reducing the base station's energy consumption to the greatest extent by further constraining the transmitting behavior of different UEs during inactive time.

Optionally, the second configuration information includes at least one of second discontinuous transmission and reception configuration information, second downlink discontinuous transmission configuration information, and second uplink discontinuous reception configuration information.

Optionally, the second configuration information may be related to the power state of the network device.

Optionally, different power states of the network device correspond to different or same second configuration information.

Optionally, the power state of the network device includes at least one of deep sleep state, light sleep state, micro sleep state, uplink only, and downlink only.

Optionally, the step S20 includes at least one of the following:
when the second configuration information is the second discontinuous transmission and reception configuration information, not transmitting or receiving service data and/or reference signals during inactive time of the second configuration information;
when the second configuration information is the second downlink discontinuous transmission configuration information, not receiving downlink service data and/or reference signals during the inactive time of the second configuration information; and
when the second configuration information is the second uplink discontinuous reception configuration information, not transmitting uplink service data and/or reference signals during the inactive time of the second configuration information.

Optionally, the method further includes at least one of the following:
a cycle of the second downlink discontinuous transmission configuration information is equal to a cycle of the second uplink discontinuous reception configuration information;
active time of the second uplink discontinuous reception configuration information comprises uplink service transmission duration configured in the last downlink control information carrying uplink scheduling information within the second downlink discontinuous reception configuration information; and
a starting symbol position of the second downlink discontinuous transmission configuration information is aligned with a starting symbol position of the second uplink discontinuous reception configuration information.

Optionally, the method further includes at least one of the following:
at least one of a discontinuous reception cycle, a start offset of the discontinuous reception cycle and a slot offset of the discontinuous reception cycle in the first configuration information for different users is the same;
a starting symbol position of the terminal device's discontinuous reception cycle determined by the first configuration information is aligned with a starting symbol position of the network device's discontinuous transmission cycle determined by the second configuration information;
active time of the discontinuous reception cycle determined by the first configuration information for different users falls within a discontinuous transmission active time determined by the second configuration information;
a duration of the discontinuous reception cycle in the first configuration information for different users is longer than or equal to a duration of the discontinuous transmission cycle in the second configuration information; and
at least one of a duration timer, inactivity timer, downlink hybrid automatic repeat request round trip timer, uplink hybrid automatic repeat request round trip timer, downlink retransmission timer, and uplink retransmission timer in the first configuration information for different users is different.

Optionally, the first configuration information and the second configuration information are activated by the same DCI field.

Optionally, the first configuration information and the second configuration information are activated by different DCI fields.

Optionally, the first configuration information and the second configuration information are activated by the same MAC CE.

Optionally, the first configuration information and the second configuration information are activated by different MAC CEs.

Optionally, only the second configuration information may be activated, or the first configuration information and the second configuration information may be activated at the same time.

Optionally, the first configuration information and/or the second configuration information may be pre-configured by an RRC message and activated for the terminal device through DCI or MAC CE.

Optionally, the network device transmits an RRC message containing the first configuration information and/or the second configuration information to the terminal device. The terminal device receives the RRC message and activates the first configuration information and/or the second configuration information currently required to be used according to the DCI or MAC CE, and then determines whether it is necessary to transmit uplink service data and/or reference signals, or whether it is necessary to receive downlink service data and/or reference signals based on the activated first configuration information and/or second configuration information.

In technical solutions of the present application, the network device transmits the first configuration information and activates the first configuration information for all terminal devices in the cell through DCI or MAC CE, which can effectively align the inactive time of all terminal devices in the cell, and thus maximize the purpose of reducing the base station's energy consumption.

In technical solutions of the present application, the network device transmits the first configuration information and/or the second configuration information, and activates the first configuration information and/or the second configuration information for all terminal devices in the cell through DCI or MAC CE, which can solve the problem of uniform distribution of C-DRX active time of different UEs in the entire DRX cycle, and/or achieve the purpose of minimizing base station's power consumption by further constraining the transmission behavior of different UEs during inactive time.

### Second embodiment

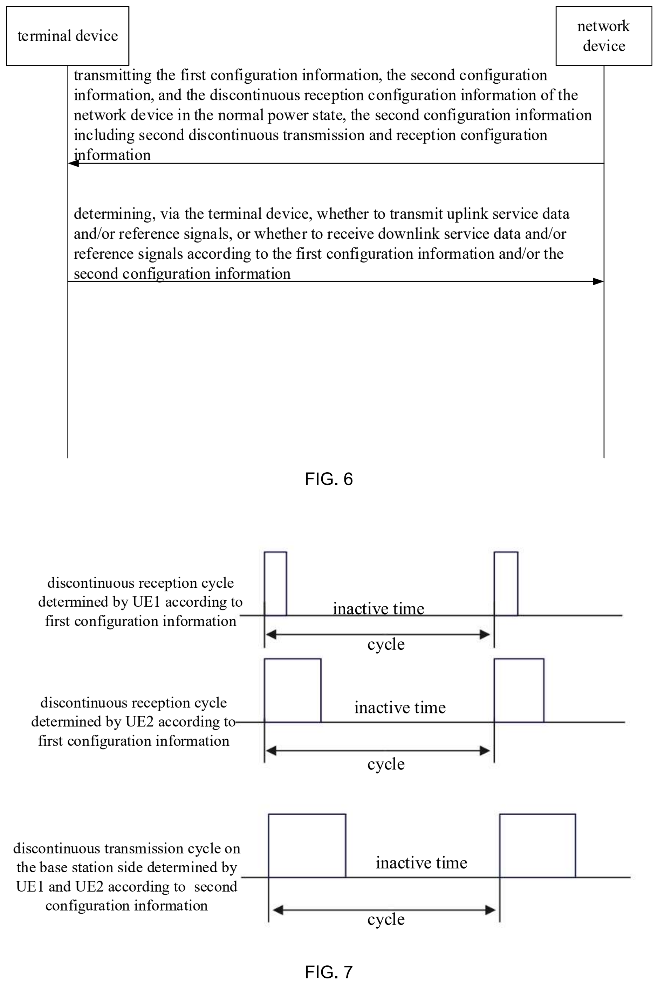

As shown in FIG. 6, based on the above embodiment, the second embodiment of the present application provides a processing method.

Optionally, the terminal device can determine whether to transmit uplink service data and/or reference signals, or whether to receive downlink service data and/or reference signals according to the first configuration information and the second configuration information.

Optionally, the first configuration information is configured to determine the uplink transmission and downlink reception behavior of the terminal device.

Optionally, the first configuration information includes discontinuous reception configuration information.

Optionally, the second configuration information is configured to determine the uplink reception and downlink transmission behavior of the network device.

Optionally, the second configuration information includes second discontinuous transmission and reception configuration information.

Optionally, the first configuration information and the second configuration information are applicable to the terminal device in the RRC connection state.

Optionally, the first configuration information and the second configuration information are activated for the terminal device only when the network device is in the energy-saving state.

Optionally, during the inactive time in the second discontinuous transmission and reception configuration information, the terminal device does not transmit and receive service data and/or reference signals.

Optionally, at least one of the discontinuous reception cycle, the start offset of the discontinuous reception cycle, and the slot offset of the discontinuous reception cycle in the first configuration information for different users is the same.

Optionally, the starting symbol position of the terminal device's discontinuous reception cycle determined by the first configuration information is aligned with the starting symbol position of the network device's discontinuous transmission cycle determined by the second configuration information.

Optionally, the active time of the discontinuous reception cycle determined by the first configuration information for different users falls within the discontinuous transmission active time determined by the second configuration information.

Optionally, at least one of the duration timer, inactivity timer, downlink hybrid automatic repeat request round trip timer, uplink hybrid automatic repeat request round trip timer, downlink retransmission timer, and uplink retransmission timer in the first configuration information for different users is different.

Optionally, taking UE1 and UE2 as an example, UE1 and UE2 are in an RRC connection state, and the network device transmits the first configuration information to UE1 and the second configuration information to UE2 respectively, and/or, the network device also needs to transmit the discontinuous reception configuration information of the network device in the normal power state to both UE1 and UE2. Assuming that UE1 and UE2 share same parameters in their first configuration information regarding the discontinuous reception cycle, start offset of the discontinuous reception cycle, and slot offset of the discontinuous reception cycle(taking the long DRX cycle as an example), but the duration timer configuration in the first configuration information is different, then UE1 and UE2 will have symbol-aligned starting positions for their DRX cycles while exhibiting different active duration length. As shown in FIG. 7, if the starting position of the terminal device's discontinuous reception cycle determined by the first configuration information is aligned with the starting symbol position of the network device's discontinuous transmission cycle determined by the second configuration information, the discontinuous reception cycle on the terminal side determined by UE1 and UE2 according to the first configuration information and the discontinuous transmission cycle on the base station side determined by UE1 and UE2 according to the second configuration information can be shown in FIG. 7.

In technical solutions of the present application, by configuring the first configuration information for the terminal device, the starting positions of the discontinuous reception cycles for all terminals in the energy-saving cell can be aligned, and/or by configuring the second configuration information for the terminal device, the starting position of the discontinuous transmission cycle on the base station side can be aligned with the starting position of the discontinuous reception cycle on the terminal side, so that the inactive time of different terminals in the energy-saving cell can be guaranteed to be consistent with the inactive time of the cell, and thus the impact of the inactive time on the original data service or reference signals transmission in the discontinuous reception cycle of the terminal device determined by the second configuration information can be reduced, and/or, the base station can also shut down the radio frequency channel during the centrally reserved inactive time and enter the dormant state to save the base station's energy consumption.

### Third embodiment

Based on the above embodiments, the third embodiment of the present application provides a processing method.

Optionally, the terminal device can determine whether to transmit uplink service data and/or reference signals, or whether to receive downlink service data and/or reference signals according to the first configuration information and the second configuration information.

Optionally, the first configuration information is configured to determine the uplink transmission and downlink reception behavior of the terminal device.

Optionally, the first configuration information includes discontinuous reception configuration information.

Optionally, the second configuration information is configured to determine the uplink reception and downlink transmission behavior of the network device.

Optionally, the second configuration information includes second discontinuous transmission and reception configuration information.

Optionally, the first configuration information and the second configuration information are applicable to the terminal device in the RRC connection state.

Optionally, the first configuration information and the second configuration information are activated for the terminal device only when the network device is in the energy-saving state.

Optionally, during the inactive time in the second discontinuous transmission and reception configuration information, the terminal device does not transmit and receive service data and/or reference signals.

Optionally, the active time of the discontinuous reception cycle determined by the first configuration information for different users falls within the discontinuous transmission active time determined by the second configuration information.

Optionally, the duration of the discontinuous reception cycle in the first configuration information for different users is longer than or equal to the duration of the discontinuous transmission cycle in the second configuration information.

Optionally, at least one of the duration timer, inactivity timer, downlink hybrid automatic repeat request round trip timer, uplink hybrid automatic repeat request round trip timer, downlink retransmission timer, and uplink retransmission timer in the first configuration information for different users is different.

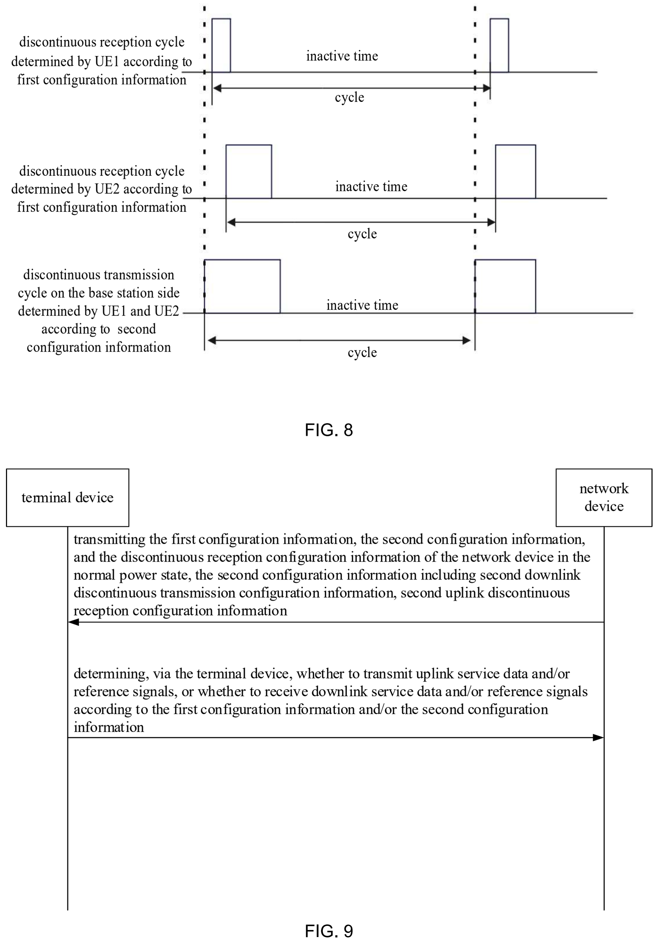

Optionally, taking UE1 and UE2 as an example, UE1 and UE2 are in RRC connection state, the network device transmits the first configuration information to UE1 and the second configuration information to UE2 respectively, and/or, the network device also needs to transmit the discontinuous reception configuration information of the network device in normal power state to both UE1 and UE2. Assume that the discontinuous reception cycle, discontinuous reception start offset, discontinuous reception slot offset and duration timer configuration in the first configuration information of UE1 and UE2 are all different (taking the long DRX cycle as an example), but the active time of the discontinuous reception cycle determined by UE1 and UE2 according to the first configuration information falls within the active time of the discontinuous transmission cycle on the base station side determined by UE1 and UE2 according to the second configuration information, then the starting position of the discontinuous reception cycle determined by UE1 and UE2 according to the first configuration information is random, the activation duration length of the discontinuous reception cycle is different, and/or the active time of the discontinuous reception cycle determined by UE1 and UE2 according to the first configuration information falls within the active time of the discontinuous transmission cycle on the base station side determined by UE1 and UE2 according to the second configuration information. Optionally, the schematic diagram of the discontinuous reception cycle determined by UE1 and UE2 according to the first configuration information and the discontinuous transmission cycle determined by UE1 and UE2 according to the second configuration information on the base station side can be shown in FIG. 8.

Compared with the above-mentioned second embodiment, the technical solution of this embodiment can further increase the flexibility of terminal scheduling and reduce the collision of terminal scheduling resources by randomizing the starting position and duration of the discontinuous reception cycle determined by different terminals according to the first configuration information.

### Fourth embodiment

As shown in FIG. 9, based on the above embodiments, the fourth embodiment of the present application provides a processing method.

Optionally, the terminal device can determine whether to transmit uplink service data and/or reference signals, or whether to receive downlink service data and/or reference signals according to the first configuration information and the second configuration information.

Optionally, the first configuration information is configured to determine the uplink transmission and downlink reception behavior of the terminal device.

Optionally, the first configuration information includes discontinuous reception configuration information.

Optionally, the second configuration information is configured to determine the uplink reception and downlink transmission behavior of the network device.

Optionally, the second configuration information includes second downlink discontinuous transmission configuration information and second uplink discontinuous reception configuration information.

Optionally, the first configuration information and the second configuration information are applicable to the terminal device in the RRC connection state.

Optionally, the first configuration information and the second configuration information are activated for the terminal device only when the network device is in the energy-saving state.

Optionally, during the inactive time of the network device's discontinuous transmission cycle determined by the second downlink discontinuous transmission configuration information, downlink service data and/or reference signals are not received.

Optionally, during the inactive time of the network device's discontinuous reception cycle determined by the second uplink discontinuous reception configuration information, uplink service data and/or reference signals are not transmitted.

Optionally, the method further includes at least one of the following:
the discontinuous transmission cycle of the network device determined by the second downlink discontinuous transmission configuration information is equal to the discontinuous reception cycle of the network device determined by the second uplink discontinuous reception configuration information;
the active time of the network device's discontinuous reception cycle determined by the second uplink discontinuous reception configuration information includes the uplink service transmission duration configured in the downlink control information carrying the uplink scheduling information of the last transmission in the discontinuous transmission cycle of the network device determined by the second downlink discontinuous reception configuration information;
the starting symbol position of the network device's discontinuous transmission cycle determined by the second downlink discontinuous transmission configuration information is aligned with the starting symbol position of the network device's discontinuous reception cycle determined by the second uplink discontinuous reception configuration information.

Optionally, at least one of the duration timer, inactivity timer, downlink hybrid automatic repeat request round trip timer, uplink hybrid automatic repeat request round trip timer, downlink retransmission timer, and uplink retransmission timer in the first configuration information for different users is different.

Optionally, taking UE1 and UE2 as an example, UE1 and UE2 are in the RRC connection state, and the network device transmits the first configuration information to UE1 and the second configuration information to UE2 respectively, and/or the network device also needs to transmit the discontinuous reception configuration information of the network device in the normal power state to both UE1 and UE2.

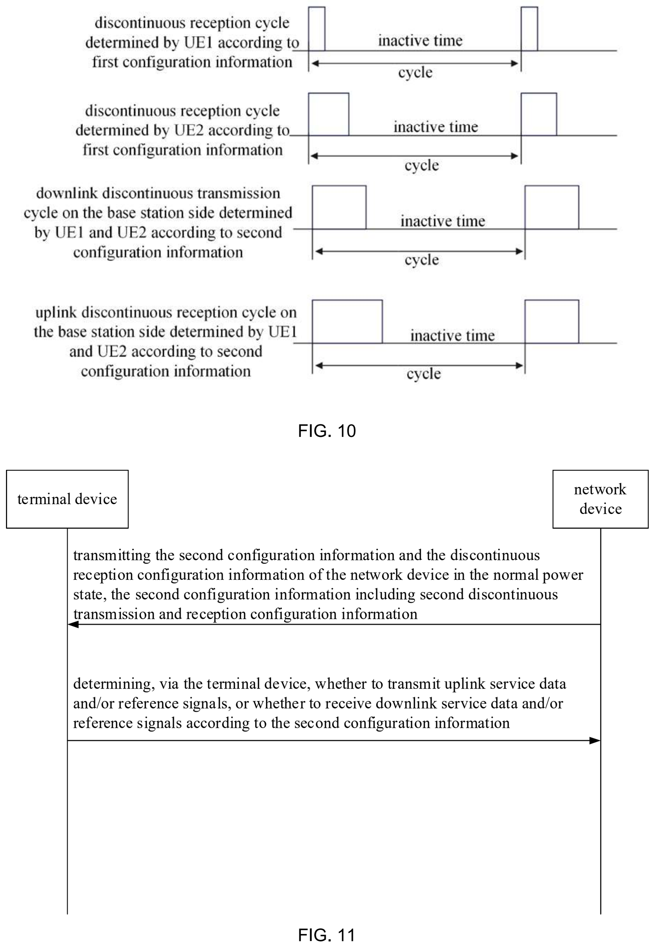

Optionally, Assuming that UE1 and UE2 share same parameters in their first configuration information regarding the discontinuous reception cycle, start offset of the discontinuous reception cycle, and slot offset of the discontinuous reception cycle(taking the long DRX cycle as an example), but the duration timer configurations in the first configuration information are different, then the starting positions of the discontinuous reception cycles of UE1 and UE2 are symbol-aligned and the active duration lengths are different, as shown in FIG. 10.

Assuming that the starting position of the second downlink discontinuous transmission cycle determined according to the second downlink discontinuous transmission configuration information, the starting position of the second uplink discontinuous transmission cycle determined according to the second uplink discontinuous reception configuration information, and the starting position of the terminal device discontinuous reception cycle determined according to the first configuration information are symbol-aligned, and/or assuming that the last subframe of the downlink discontinuous transmission active time on the base station side is transmitted by uplink scheduling DCI, then the active time of the uplink discontinuous reception configuration information on the base station side is longer than the active time of the downlink discontinuous transmission configuration information on the base station side to ensure uplink transmission.

Optionally, a schematic diagram of the discontinuous reception cycle determined by UE1 and UE2 according to the first configuration information, the downlink discontinuous transmission cycle determined by UE1 and UE2 on the base station side according to the second downlink discontinuous transmission configuration information, and the uplink discontinuous reception cycle determined by UE1 and UE2 on the base station side according to the second uplink discontinuous reception configuration information can be shown in FIG. 10.

Compared with the above-mentioned second and third embodiments, in the technical solutions of this embodiment, configuring the second downlink discontinuous transmission configuration information and the second uplink discontinuous reception configuration information for the terminal in the second configuration information can better ensure that the base station can be scheduled according to the actual needs of the uplink and downlink services, and further ensure that the suspension of all service data and reference signals transmissions during the base station's inactive period minimally impacts terminal services, thereby better realizing base station power savings.

### Fifth embodiment

As shown in FIG. 11, based on the above embodiments, the fifth embodiment of the present application provides a processing method.

Optionally, the terminal device can determine whether to transmit uplink service data and/or reference signals, or whether to receive downlink service data and/or reference signals according to the second configuration information.

Optionally, the second configuration information is configured to determine the uplink reception and downlink transmission behavior of the network device and the uplink transmission and downlink reception behavior of the terminal device.

Optionally, the second configuration information includes second discontinuous transmission and reception configuration information.

Optionally, the second configuration information is applicable to a terminal device in an RRC connected state.

Optionally, the second configuration information is activated for the terminal device only when the network device is in an energy-saving state.

Optionally, during the inactive time in the second discontinuous transmission and reception configuration information, the terminal device does not transmit and receive service data and/or reference signals.

Optionally, taking UE1 and UE2 as an example, UE1 and UE2 are in the RRC connection state, and the network device transmits the second configuration information to both UE1 and UE2 respectively, and/or the network device also needs to transmit the discontinuous reception configuration information of the network device in the normal power state to both UE1 and UE2. When the cell is in the energy-saving state, it is assumed that all camped terminal devices in the current cell use the starting position, active time, and inactive time of the discontinuous transmission cycle on the base station side determined by the second configuration information as the starting position, active time, and inactive time of the discontinuous reception cycle on the terminal side.

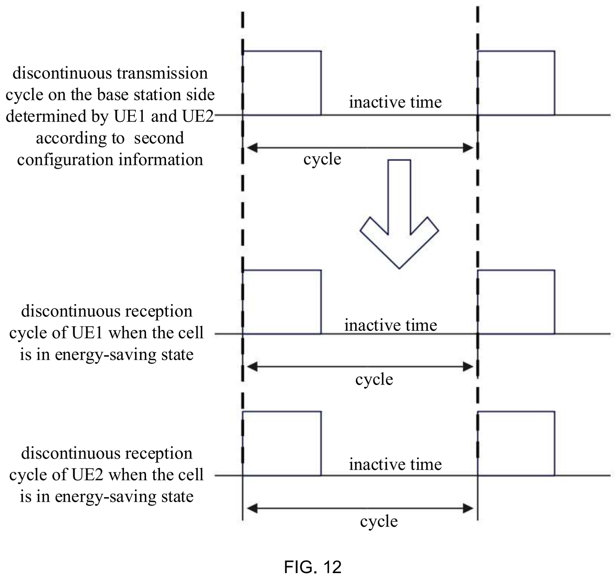

Optionally, the schematic diagram of the discontinuous reception cycle on the terminal side and the discontinuous transmission cycle on the base station side of UE1 and UE2 can be shown in FIG. 12.

Compared with the above embodiments, in the technical solution of this embodiment: when the cell is in the energy-saving state, it is only necessary to configure the same second configuration information for all terminal devices in the cell, so that the service data of all terminal devices in the cell can be concentrated within the same active time of either the base station-side discontinuous transmission cycle or the terminal-side discontinuous reception cycle, thereby reserving inactive time for the base station to sleep within the discontinuous transmission cycle on the base station side or the discontinuous reception cycle on the terminal side, thereby achieving base station power savings.

### Sixth embodiment

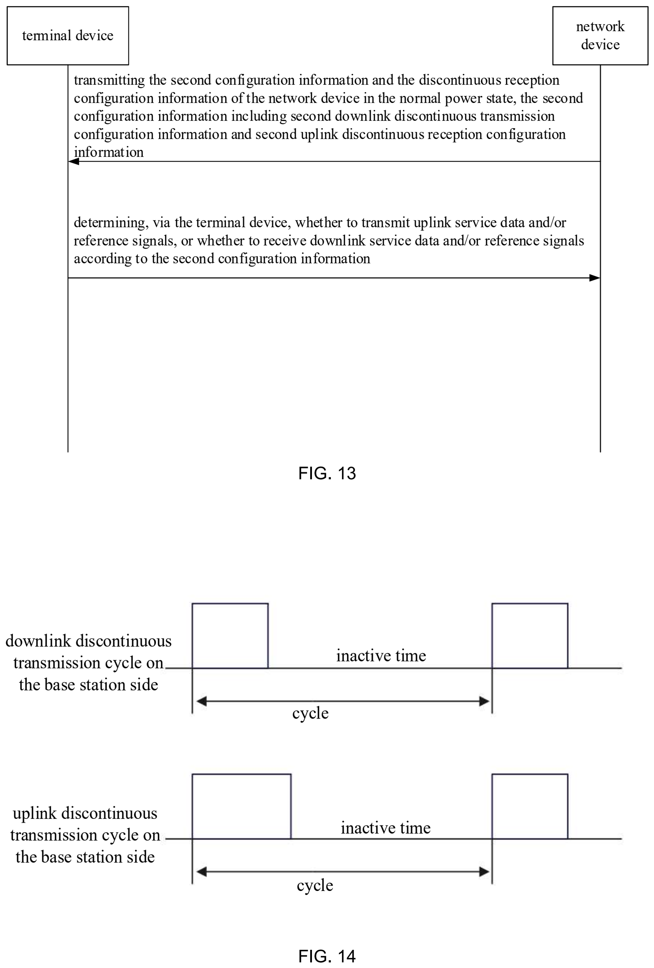

As shown in FIG. 13, based on the above embodiments, the sixth embodiment of the present application provides a processing method.

Optionally, the terminal device can determine whether to transmit uplink service data and/or reference signals, or whether to receive downlink service data and/or reference signals according to the second configuration information.

Optionally, the second configuration information is configured to determine the uplink reception and downlink transmission behaviors of the network device and the uplink transmission and downlink reception behaviors of the terminal device.

Optionally, the second configuration information includes second downlink discontinuous transmission configuration information and second uplink discontinuous reception configuration information.

Optionally, the second configuration information is applicable to a terminal device in an RRC connection state.

Optionally, the second configuration information is activated for the terminal device only when the network device is in an energy-saving state.

Optionally, during the inactive time of the network device's discontinuous transmission cycle determined by the second downlink discontinuous transmission configuration information, the downlink service data and/or reference signals is not received by the terminal device.

Optionally, during the inactive time of the network device's discontinuous reception cycle determined by the second uplink discontinuous reception configuration information, the uplink service data and/or reference signals is not transmitted by the terminal device.

Optionally, the method further includes at least one of the following:
the discontinuous transmission cycle of the network device determined by the second downlink discontinuous transmission configuration information is equal to the discontinuous reception cycle of the network device determined by the second uplink discontinuous reception configuration information;
the active time of the network device's discontinuous reception cycle determined by the second uplink discontinuous reception configuration information includes the uplink service transmission duration configured in the downlink control information carrying the uplink scheduling information of the last transmission in the discontinuous transmission cycle of the network device determined by the second downlink discontinuous reception configuration information;
the starting symbol position of the network device's discontinuous transmission cycle determined by the second downlink discontinuous transmission configuration information is aligned with the starting symbol position of the network device's discontinuous reception cycle determined by the second uplink discontinuous reception configuration information.

Taking UE1 and UE2 as an example, optionally, UE1 and UE2 are in the RRC connection state, and the network device transmits the second configuration information to both UE1 and UE2 respectively, and/or the network device also needs to transmit the discontinuous reception configuration information of the network device in the normal power state to both UE1 and UE2. When the cell is in the energy-saving state, assume that all camped terminal devices in the current cell use the starting position, active time, and inactive time of the discontinuous transmission cycle on the base station side determined by the second downlink discontinuous transmission configuration as the starting position, active time, and inactive time of the discontinuous reception cycle on the terminal side; and all camped terminal devices in the current cell use the active time and inactive time determined by the second uplink discontinuous reception configuration to limit the time when the UE side can perform uplink transmission (different from the terminal can perform uplink transmission during the inactive time of the discontinuous reception cycle on the UE side). At the same time, if the last subframe of the active time of the downlink discontinuous transmission of the base station has an uplink scheduling DCI transmission, the active time of the uplink discontinuous reception configuration information on the base station side needs to be longer than the active time of the downlink discontinuous transmission configuration information on the base station side to ensure uplink transmission.

Optionally, a schematic diagram of the downlink discontinuous transmission cycle on the base station side determined by UE1 and UE2 according to the second downlink discontinuous transmission configuration information and the uplink discontinuous reception cycle on the base station side determined by UE1 and UE2 according to the second uplink discontinuous reception configuration information is shown in FIG. 14.

Compared with the fifth embodiment, in the technical solution of this embodiment: configuring the second downlink discontinuous transmission configuration information and the second uplink discontinuous reception configuration information for the terminal in the second configuration information can better ensure that the base station can perform scheduling according to the actual needs of the uplink and downlink services, further ensure the rationality when suspendin all service data and reference signals transmission during the base station inactive time, and better achieve base station power savings.

### Seventh embodiment

Based on the above embodiments, the seventh embodiment of the present application provides a processing method.

Optionally, the terminal device can determine whether to transmit uplink service data and/or reference signals, or whether to receive downlink service data and/or reference signals according to the first configuration information and/or the second configuration information.

Optionally, the first configuration information is configured to determine the uplink transmission and downlink reception behavior of the terminal device.

Optionally, the first configuration information includes discontinuous reception configuration information.

Optionally, the first configuration information is applicable to a terminal device in an RRC connected state.

Optionally, the first configuration information is activated for the terminal device only when the network device is in an energy-saving state.

Optionally, in this embodiment, the network device needs to transmit discontinuous reception configuration information in a normal power state and a first configuration information to all terminals camped on the cell. The first configuration information is denoted as drx-Config-NES-r18, and the specific configuration definition is as follows:

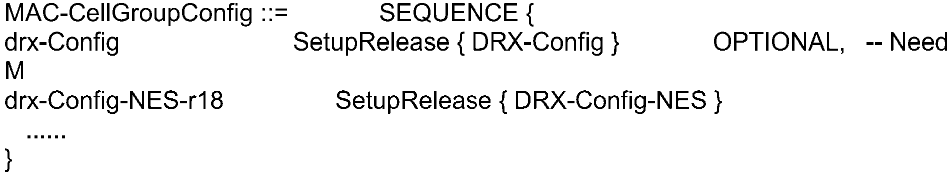

Optionally, at least one of the discontinuous reception cycle, the start offset of the discontinuous reception cycle, and the slot offset of the discontinuous reception cycle in the first configuration information for different users is the same.

Optionally, at least one of the duration timer, the inactivity timer, the downlink hybrid automatic repeat request round trip timer, the uplink hybrid automatic repeat request round trip timer, the downlink retransmission timer, and the uplink retransmission timer in the first configuration information for different users is different.

Optionally, in this embodiment, the UE-side discontinuous reception cycle (drx-LongCycleStartOffset), the start offset of the discontinuous reception cycle (drx-LongCycleStartOffset) and the slot offset (drx-SlotOffset) of the discontinuous reception cycle in the first configuration information can be set to be the same, and the discontinuous reception cycle-related timer not given in the first configuration information may reuse the timer of the UE-side discontinuous reception configuration information in the normal power state, such as on duration, and the content contained in the first configuration information is specifically defined as follows:

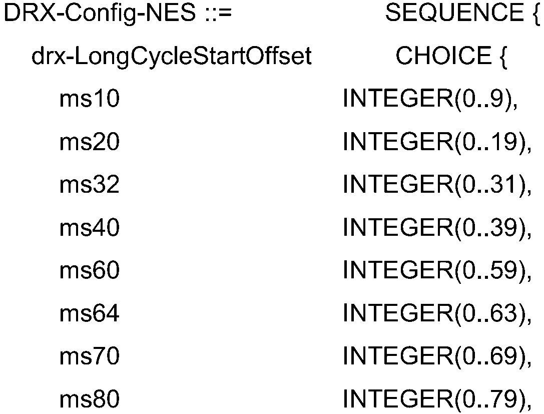

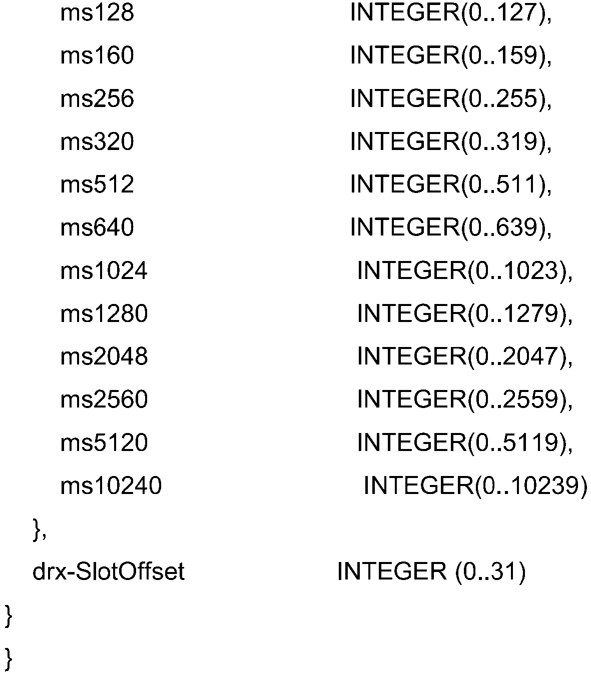

Optionally, the duration of the discontinuous reception cycle in the first configuration information for different users is longer than or equal to the duration of the discontinuous transmission cycle in the second configuration information.

Optionally, in this embodiment, it is only possible to limit the duration of the discontinuous reception cycle in the first configuration information of all camped terminals in the energy-saving cell to be longer than or equal to the duration of the discontinuous transmission cycle in the second configuration information, but no limitation is imposed on the discontinuous reception cycle, the start offset of the discontinuous reception cycle, the slot offset of the discontinuous reception cycle, and the timer related to the discontinuous reception cycle in the first configuration information of all camped terminals in the energy-saving cell. The content contained in the first configuration information is specifically defined as follows:

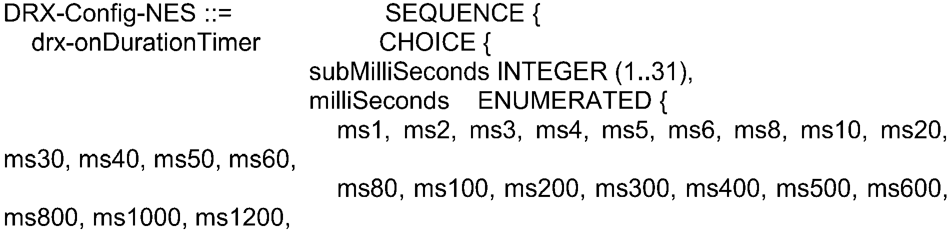

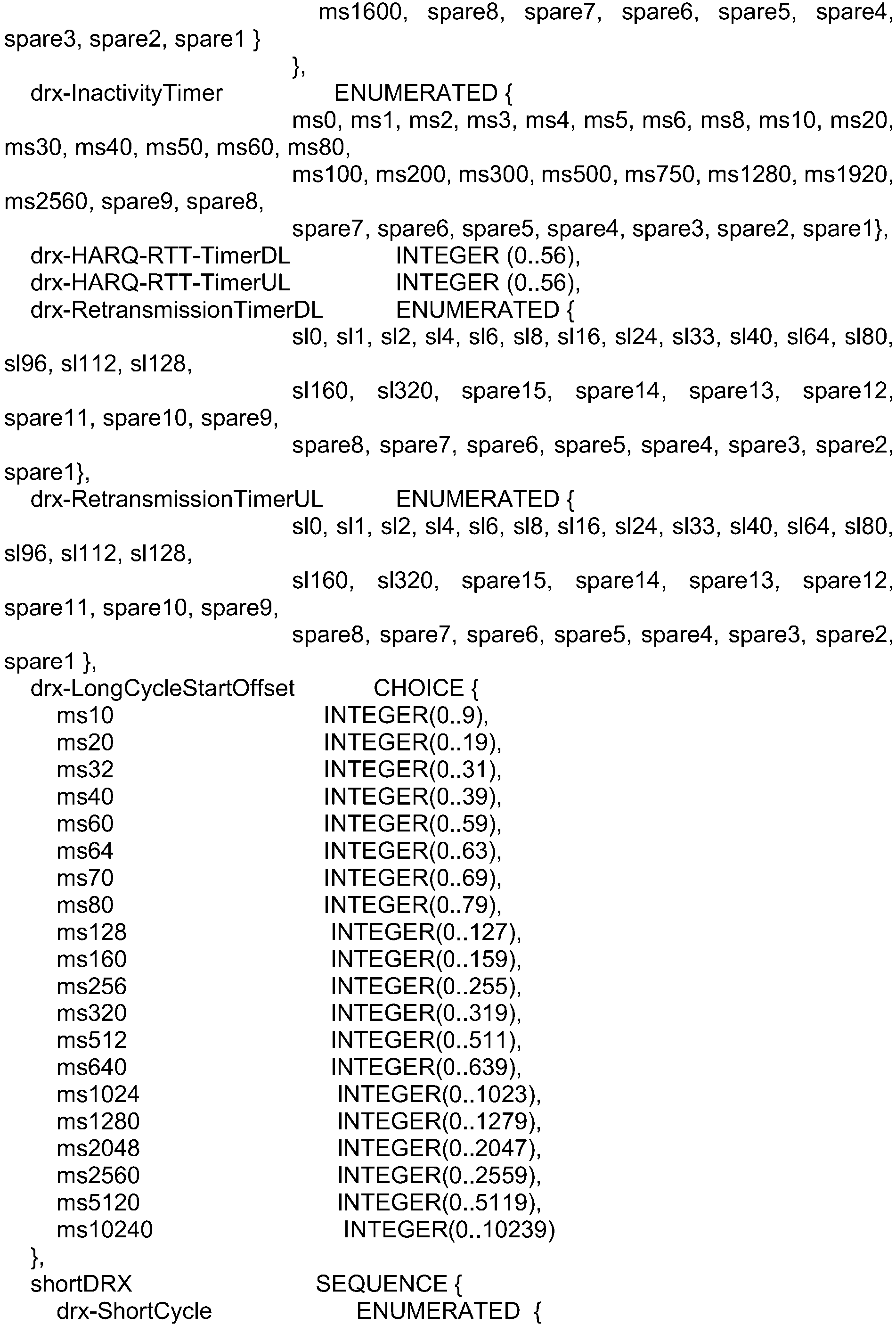

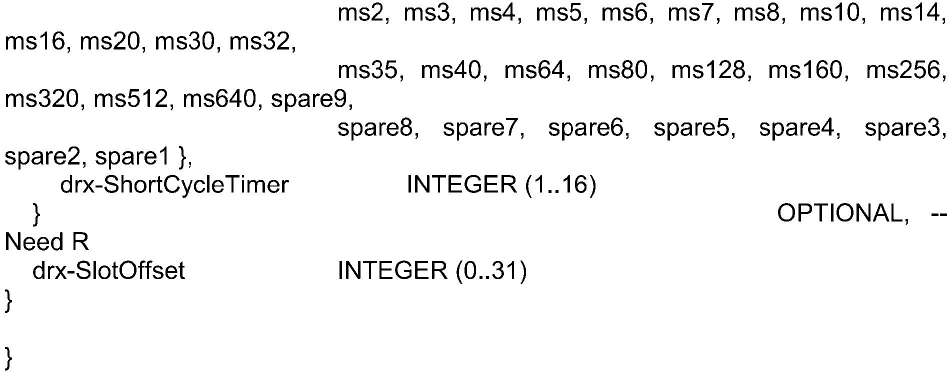

Optionally, at least one of the duration timer, inactivity timer, downlink hybrid automatic repeat request round trip timer, uplink hybrid automatic repeat request round trip timer, downlink retransmission timer, and uplink retransmission timer in the first configuration information for different users is different.

Optionally, in this embodiment, the timer values in the above-mentioned discontinuous reception cycle on the terminal side determined by all camped UEs in the cell in the energy-saving state according to their corresponding first configuration information may be entirely identical, partially identical, or completely different. However, the active time determined by the timer in the above-mentioned discontinuous reception cycle on the terminal side must fall within the active time of the discontinuous transmission cycle on the base station side determined by the second configuration information, and/or the duration of the UE-side discontinuous reception cycle must be longer than or equal to the duration of the discontinuous transmission cycle in the second configuration information.

In the technical solution of this embodiment: by constraining the content contained in the first configuration information, it is possible to achieve alignment of the starting position of the discontinuous reception cycle on the terminal side and the inactive time of all UEs resident in the cell in the energy-saving state, and/or, it is also possible to cooperate with the second configuration information to reduce the inactive time of the UE's discontinuous reception cycle on the terminal side and the behavior of uplink transmission according to the configured resources, thereby achieving better and more sustained energy savings for the base station.

### Eighth embodiment

Based on the above embodiments, the eighth embodiment of the present application provides a processing method.

Optionally, the terminal device can determine whether to transmit uplink service data and/or reference signals, or whether to receive downlink service data and/or reference signals according to the first configuration information and/or the second configuration information.

Optionally, the second configuration information includes at least one of the second discontinuous transmission and reception configuration information, the second downlink discontinuous transmission configuration information, and the second uplink discontinuous reception configuration information.

Optionally, the second configuration information is applicable to the terminal device in the RRC connection state.

Optionally, the second configuration information is activated for the terminal device only when the network device is in the energy-saving state.

Optionally, in this embodiment, the network device needs to transmit the discontinuous reception configuration information in the normal power state, the first configuration information, and the second discontinuous transmission and reception configuration information to all terminals camped on the cell. The second discontinuous transmission and reception configuration information is denoted as Cell-dtx-drx-Config-r18, and the specific configuration definition is as follows:

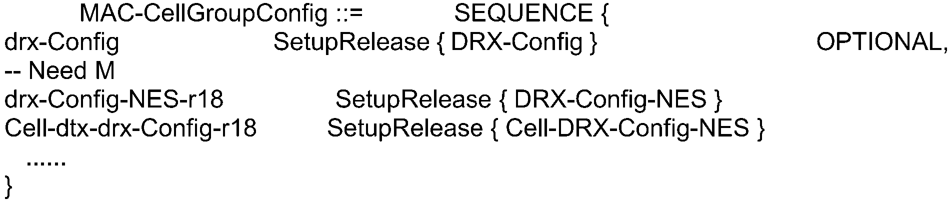

Optionally, in this embodiment, the network device may also transmit only the discontinuous reception configuration information in the normal power state and the second discontinuous transmission and reception configuration information to all terminals camped on the cell, the second discontinuous transmission and reception configuration information is denoted as Cell-dtx-drx-Config-r18, and the specific configuration definition is as follows:

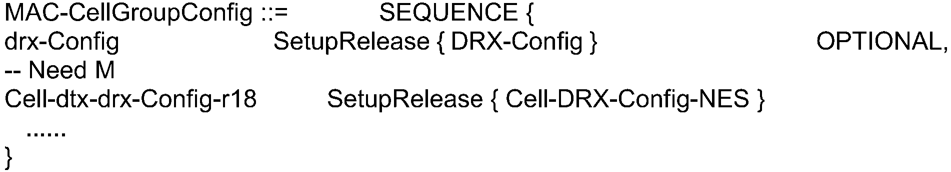

Optionally, in this embodiment, the network device needs to transmit the discontinuous reception configuration information in the normal power state, the first configuration information, the second downlink discontinuous transmission configuration information and the second uplink discontinuous reception configuration information to all terminals camped on the cell. Optionally, the second downlink discontinuous transmission configuration information and the second uplink discontinuous reception configuration information are denoted as Cell-dtx-DL-Config-r18 and Cell-drx-UL-Config-r18 respectively, and the specific configuration definition is as follows:

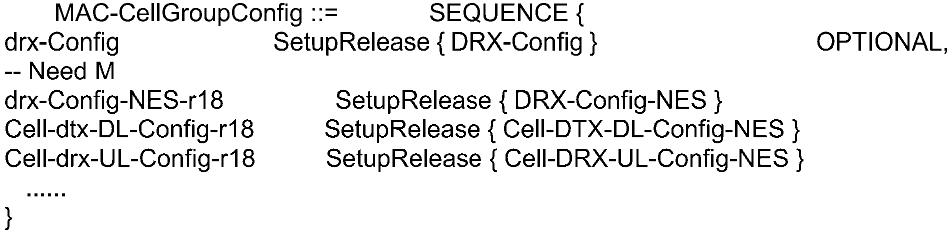

Optionally, in this embodiment, the network device may also transmit only the discontinuous reception configuration information in the normal power state, the second downlink discontinuous transmission configuration information, and the second uplink discontinuous reception configuration information to all terminals camped on the cell. The second downlink discontinuous transmission configuration information and the second uplink discontinuous reception configuration information are respectively denoted as Cell-dtx-DL-Config-r18 and Cell-drx-UL-Config-r18, and the specific configuration definition is as follows:

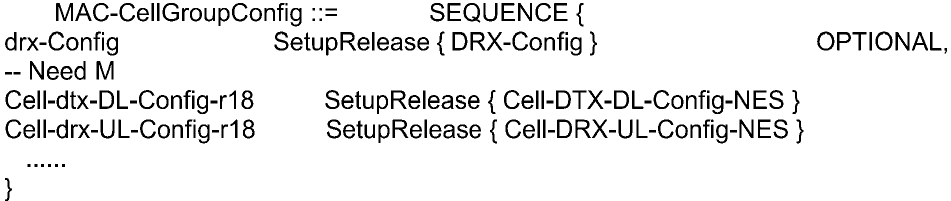

Optionally, the second discontinuous transmission and reception configuration information includes at least one of a cell discontinuous transmission cycle, a start offset of a cell discontinuous transmission cycle, and a timer of active time of a cell discontinuous transmission cycle, and the specific configuration is defined as follows:

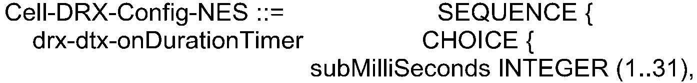

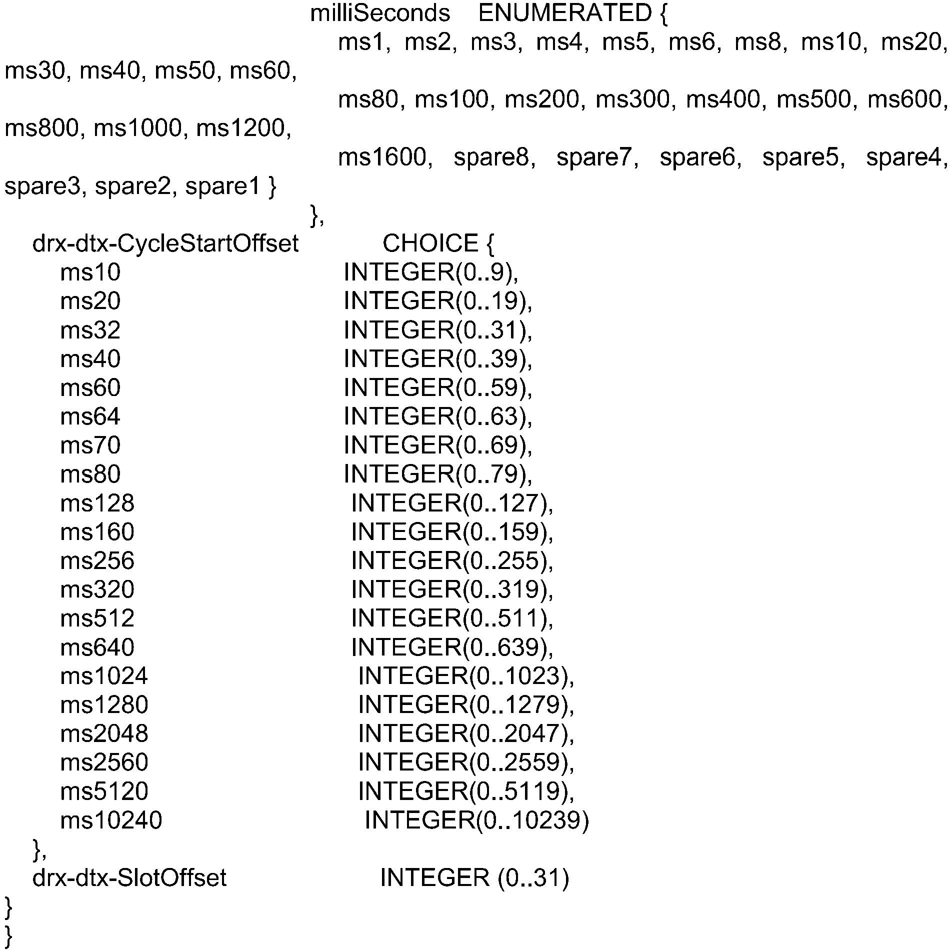

Optionally, during the inactive time in the second discontinuous transmission and reception configuration information, no data service or reference signals is transmitted or received.

Optionally, the second downlink discontinuous transmission configuration information includes at least one of the cell downlink discontinuous transmission cycle, the start offset of the cell downlink discontinuous transmission cycle, and the timer of the cell downlink discontinuous transmission cycle in the active time. The specific configuration is defined as follows:

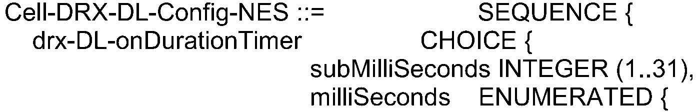

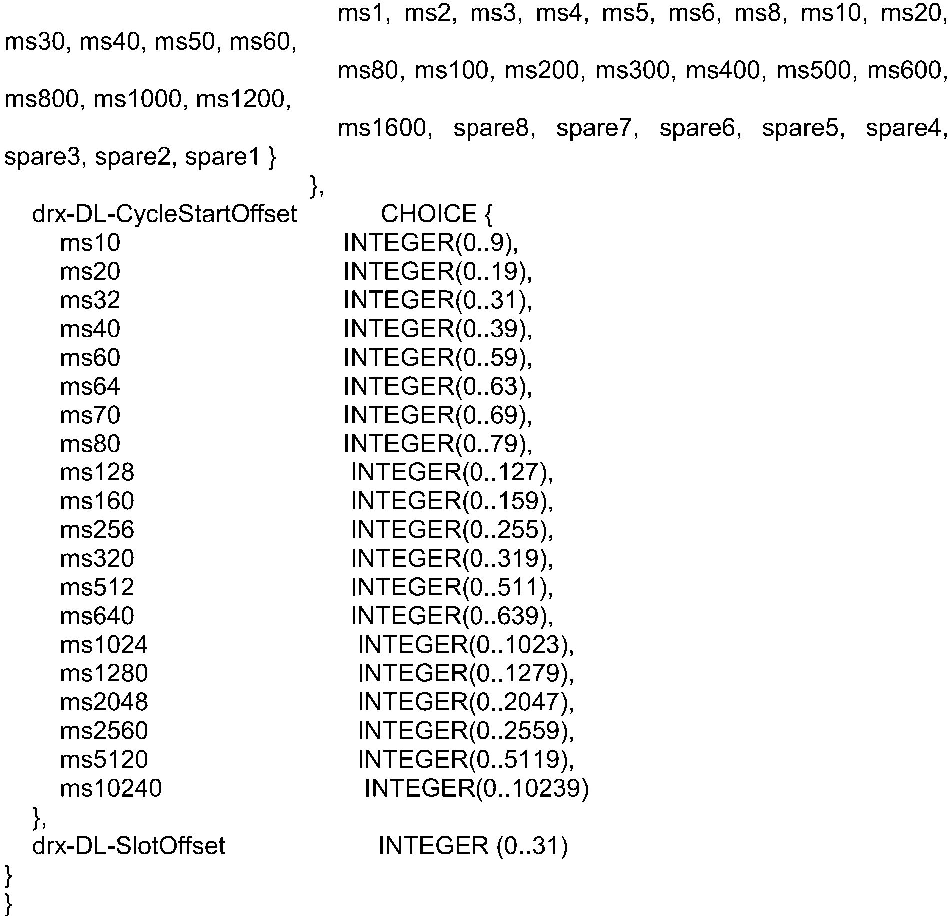

Optionally, the terminal device does not receive any downlink service data or reference signals during the inactive time of the cell downlink discontinuous transmission cycle determined by the second downlink discontinuous transmission configuration information.

Optionally, the second uplink discontinuous reception configuration information includes at least one of the cell uplink discontinuous reception cycle, the start offset of the cell uplink discontinuous reception cycle, and the timer of the cell downlink discontinuous reception cycle in the active time. The specific configuration is defined as follows:

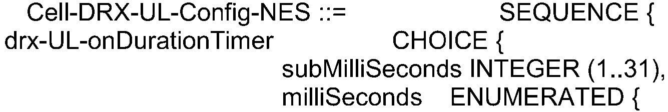

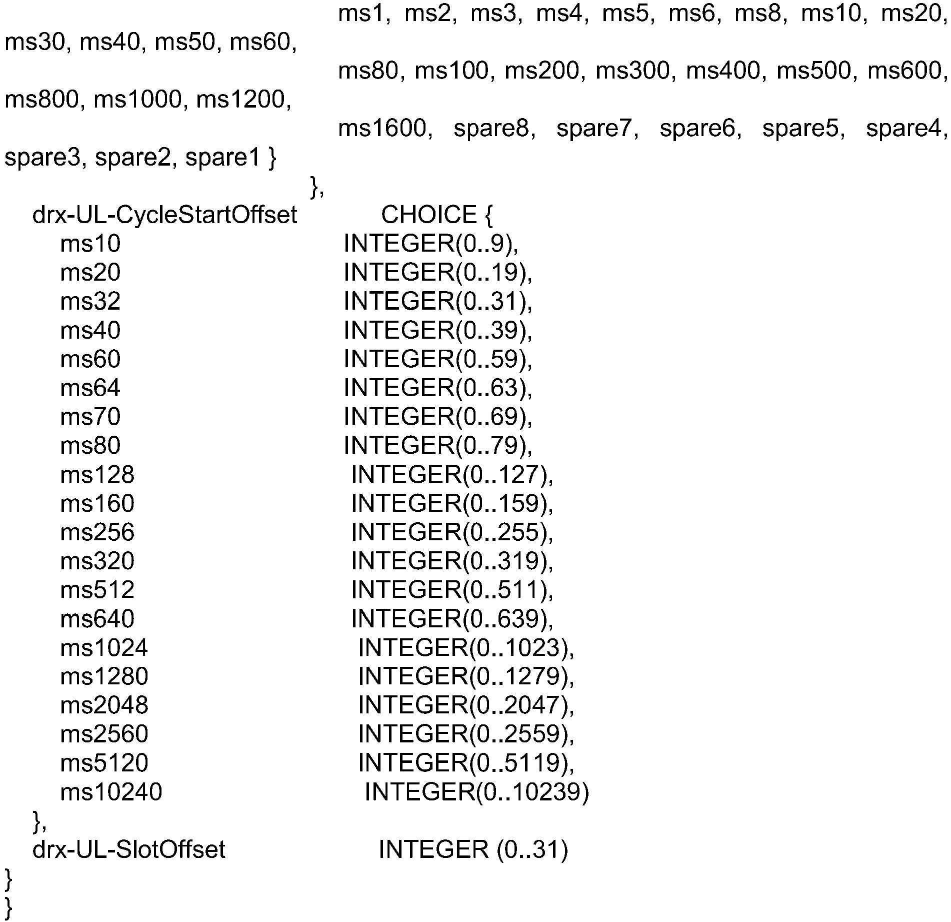

Optionally, no uplink service data or reference signals is transmitted during the inactive time of the uplink discontinuous reception cycle of the cell determined by the second uplink discontinuous reception configuration information.

In the technical solution of this embodiment: by setting different second configuration information and setting different interactive relationships between the second configuration information and the first configuration information, the behavior of the terminal device to perform uplink transmission according to the configured resources during the inactive time of the discontinuous reception cycle on the terminal side can be effectively limited, and/or, the active time of all terminals camped on the cell in the energy-saving state can be concentrated in the discontinuous transmission cycle, thereby reserving a concentrated inactive time for the base station or cell, so as to better achieve the purpose of saving energy consumption on the base station side.

### Ninth embodiment

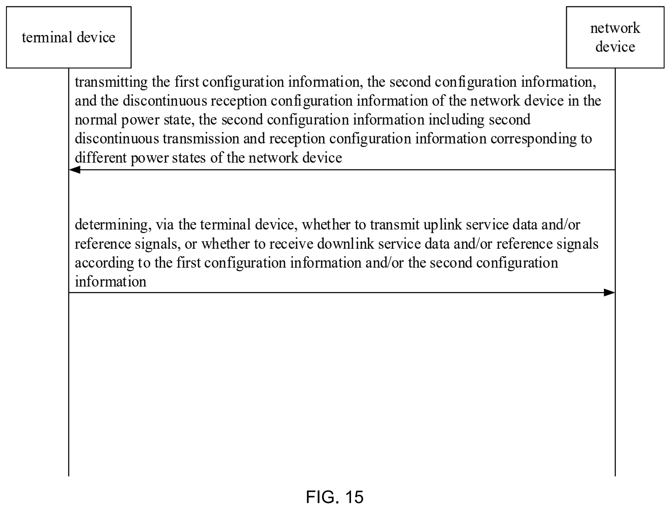

As shown in FIG. 15, based on the above embodiments, the ninth embodiment of the present application provides a processing method.

Optionally, the network device transmits the first configuration information and/or the second configuration information, so that the terminal device determines whether to transmit uplink service data and/or reference signals, or whether to receive downlink service data and/or reference signals according to the first configuration information and/or the second configuration information.

Optionally, different power states of the network device correspond to different or same second configuration information.

Optionally, the power state of the network device may include at least one of a deep sleep state, a light sleep state, a micro sleep state, uplink only, and downlink only.

Optionally, in this embodiment, the network device shall transmit the following configurations respectively to all UEs camped on the cell: the discontinuous reception (DRX) configuration under the network device's normal power state, the first configuration information, and the second discontinuous transmission and reception configurations corresponding to different power states of the network device. The first configuration information is denoted as drx-Config-NES-r18, the second discontinuous transmission and reception configuration information in the deep sleep state is denoted as Cell-dtx-drx-Config-deepsleep-r18, the second discontinuous transmission and reception configuration information in the light sleep state is denoted as Cell-dtx-drx-Config-lightsleep-r18, and the second discontinuous transmission and reception configuration information in the micro sleep state is denoted as Cell-dtx-drx-Config-microsleep-r18.

The specific configuration is defined as follows:

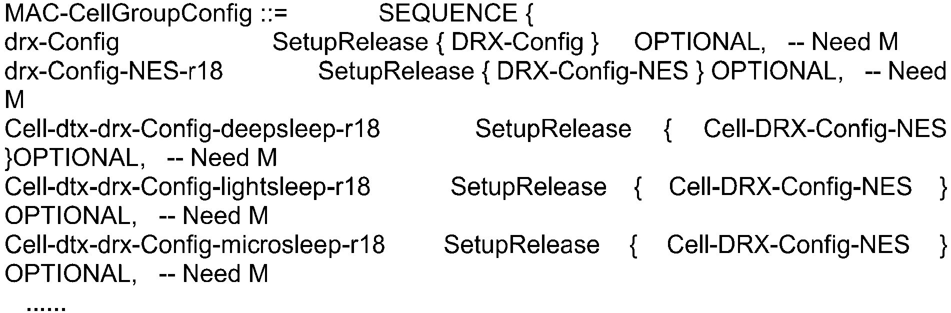

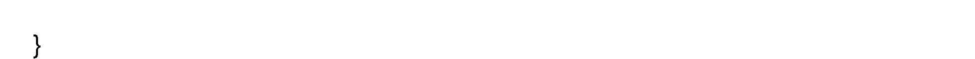

Optionally, in this embodiment, the network device needs to transmit the discontinuous reception configuration information in the normal power state and the second discontinuous transmission and reception configuration information for its different power states to all terminals camped on the cell. Optionally, the second discontinuous transmission and reception configuration information in the deep sleep state is denoted as Cell-dtx-drx-Config-deepsleep-r18, the second discontinuous transmission and reception configuration information in the light sleep state is denoted as Cell-dtx-drx-Config-lightsleep-r18, and the second discontinuous transmission and reception configuration information in the micro sleep state is denoted as Cell-dtx-drx-Config-microsleep-r18.

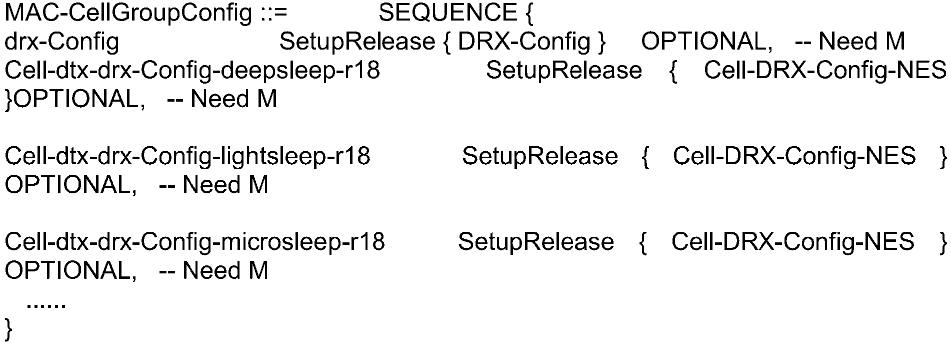

Optionally, in this embodiment, the network device shall transmit the following configurations respectively to all UEs camped on the cell: the discontinuous reception (DRX) configuration under the network device's normal power state, the first configuration information, and the second discontinuous transmission and reception configurations corresponding to different power states of the network device. Optionally, the first configuration information is denoted as drx-Config-NES-r18, the second discontinuous transmission and reception configuration information in the deep sleep state is denoted as Cell-dtx-drx-Config-deepsleep-r18, the second discontinuous transmission and reception configuration information in the light sleep state is denoted as Cell-dtx-drx-Config-lightsleep-r18, the second discontinuous transmission and reception configuration information in the micro sleep state is denoted as Cell-dtx-drx-Config-microsleep-r18, the second downlink discontinuous transmission configuration information in downlink transmission only is denoted as Cell-dtx-DL-Config-r18, and the second uplink discontinuous reception configuration information in uplink transmission only is denoted as Cell-drx-UL-Config-r18.

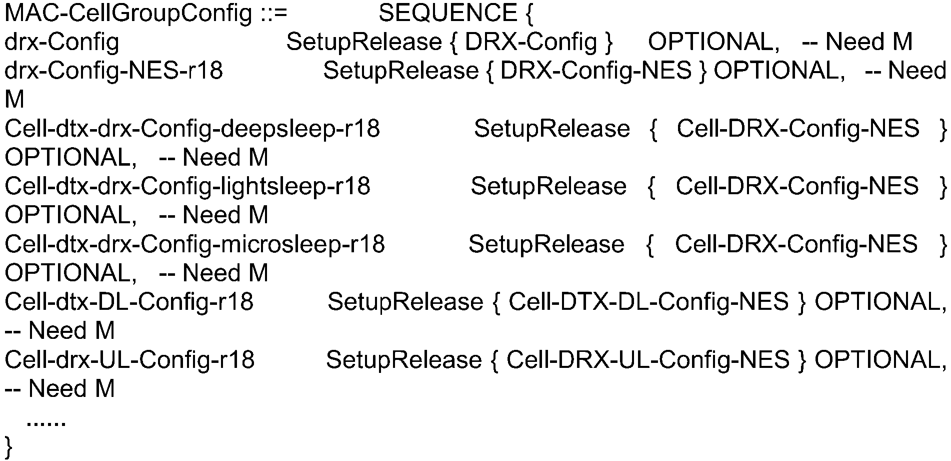

Optionally, in this embodiment, the network device needs to transmit the discontinuous reception configuration information in the normal power state and the second discontinuous transmission and reception configuration information for its different power states to all terminals camped on the cell. Optionally, the second discontinuous transmission and reception configuration information in the deep sleep state is denoted as Cell-dtx-drx-Config-deepsleep-r18, the second discontinuous transmission and reception configuration information in the light sleep state is denoted as Cell-dtx-drx-Config-lightsleep-r18, the second discontinuous transmission and reception configuration information in the micro sleep state is denoted as Cell-dtx-drx-Config-microsleep-r18, the second downlink discontinuous transmission configuration information in downlink transmission only is denoted as Cell-dtx-DL-Config-r18, and the second uplink discontinuous reception configuration information in uplink transmission only is denoted as Cell-drx-UL-Config-r18.

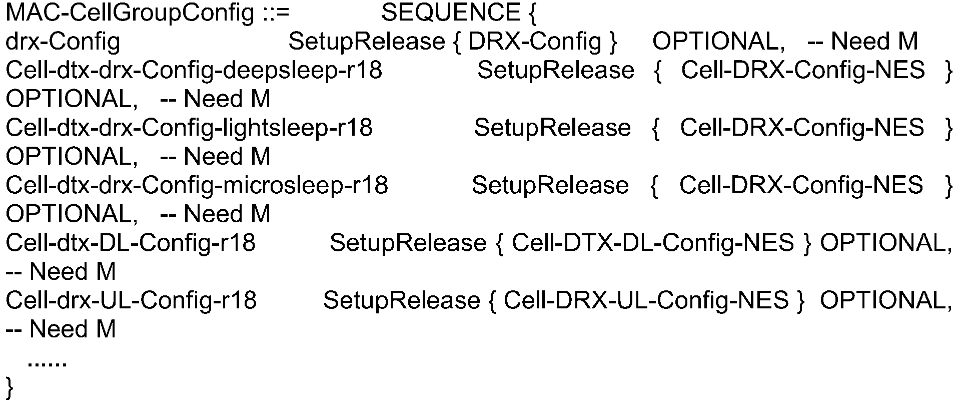

In technical solutions of the present application, by setting different second configuration information according to different power states of the network device, the scheduling flexibility can be better ensured for base stations in different power states, and/or the base station's sleep duration can be increased in a timely manner, thereby better achieving the purpose of base station power savings.

### Tenth embodiment

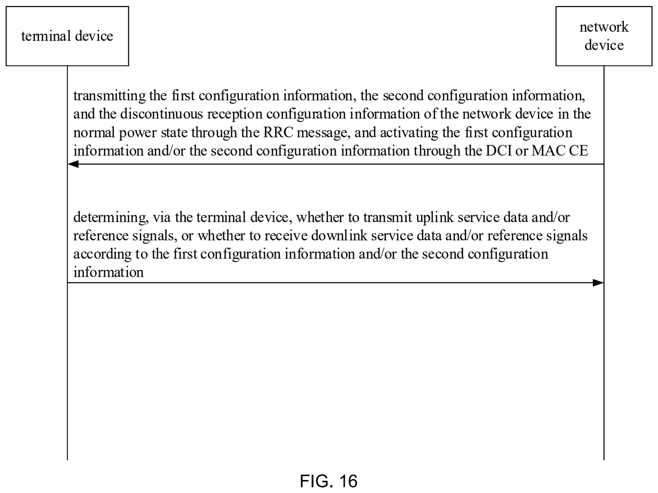

As shown in FIG. 16, based on the above embodiments, the tenth embodiment of the present application provides a processing method.

Optionally, the terminal device determines whether to transmit uplink service data and/or reference signals, or whether to receive downlink service data and/or reference signals according to the first configuration information and/or the second configuration information.

Optionally, the first configuration information includes discontinuous reception configuration information.

Optionally, the second configuration information includes second discontinuous transmission and reception configuration information, second downlink discontinuous transmission configuration information, and second uplink discontinuous reception configuration information.

Optionally, the method further includes at least one of the following:
the first configuration information and/or the second configuration information are configured by an RRC message;
the first configuration information and the second configuration information are activated by the same DCI field;
the first configuration information and the second configuration information are activated by different DCI fields;
the first configuration information and the second configuration information are activated by the same MAC CE;
the first configuration information and the second configuration information are activated by different MAC CEs.

Optionally, in this embodiment, assuming that different power states of the network device correspond to the same second configuration information, and/or the first configuration information and the second configuration information are activated by the same DCI field, then it is necessary to add 1 bit "configuration switching domain" in DCI format 1_0. When the "configuration switching domain" in DCI format 1_0 is set to 0, the UE activates the UE-side discontinuous reception configuration information of the cell in normal state and does not activate the second configuration information; and/or, when the "configuration switching domain" in DCI format 1_0 is set to 1, the UE activates the first configuration information as the UE-side discontinuous reception configuration information, and/or activates the second configuration information.

Optionally, in this embodiment, assuming that different power states of the network device correspond to the same second configuration information, and/or the terminal is only configured with the second configuration information, then, when the "configuration switching domain" in DCI format 1_0 is set to 1, only the second configuration information needs to be activated, and/or the second configuration information is used as discontinuous reception configuration information on the UE side.

Optionally, in this embodiment, assuming that different power states of the network device correspond to different second configuration information, and/or the first configuration information and the second configuration information are activated by the same DCI field, it is necessary to add N bit "configuration switching domain" in DCI format 1_0. For example, different second configuration information of the network device in different power states can be activated by codepoint. For example, 000 corresponds to the second configuration information and the first configuration information when the activated cell is in a deep sleep state, 001 corresponds to the second configuration information and the first configuration information when the activated cell is in a light sleep state, 010 corresponds to the second configuration information and the first configuration information when the cell is in a micro sleep state, 011 corresponds to the second configuration information and the first configuration information when the activated cell only has downlink transmission, 100 corresponds to the second configuration information and the first configuration information when the activated cell only has uplink transmission, and 111 corresponds to the UE-side discontinuous reception configuration information when the activated cell is in a normal state.

Similarly, the first configuration information and the second configuration information can also be activated by different DCI fields. Therefore, in this embodiment, two "switching configuration domains" need to be added to DCI format 1_0, one of which is used to activate the first configuration information and the other is used to activate the second configuration information.

Optionally, the first configuration information and/or the second configuration information of the cell in the energy-saving state can also be activated through MAC CE.

In the technical solution of the present application, the first configuration information and/or the second configuration information are activated by DCI or MAC CE, which can better adapt to the service transmission requirements of the terminal in different scenarios, and make the base station enter the energy-saving state more flexibly and quickly, thereby achieving the purpose of maximizing energy saving for the base station.

It should be noted that the above embodiments can be reasonably combined and implemented according to actual conditions, and will not be repeated here.

The embodiment of the present application also provides a processing device, which is applied to a terminal device or is a terminal device, and the device includes a determination module.

The determination module is configured for determining whether to transmit uplink service data and/or reference signals, or whether to receive downlink service data and/or reference signals, according to first configuration information and/or second configuration information.

Optionally, the second configuration information includes at least one of second discontinuous transmission and reception configuration information, second downlink discontinuous transmission configuration information, and second uplink discontinuous reception configuration information; and/or different power states of a network device correspond to different or same second configuration information.

Optionally, the determination module is further configured for at least one of the following:
when the second configuration information is the second discontinuous transmission and reception configuration information, service data and/or reference signals will not be transmitted or received during inactive time of the second configuration information;
when the second configuration information is the second downlink discontinuous transmission configuration information, downlink service data and/or reference signals will not be received during the inactive time of the second configuration information; and
when the second configuration information is the second uplink discontinuous reception configuration information, uplink service data and/or reference signals will not be transmitted during the inactive time of the second configuration information.

Optionally, the device further includes at least one of the following:
a cycle of the second downlink discontinuous transmission configuration information is equal to a cycle of the second uplink discontinuous reception configuration information;
active time of the second uplink discontinuous reception configuration information comprises uplink service transmission duration configured in the last downlink control information carrying uplink scheduling information within the second downlink discontinuous reception configuration information; and
a starting symbol position of the second downlink discontinuous transmission configuration information is aligned with a starting symbol position of the second uplink discontinuous reception configuration information.

Optionally, the device further includes at least one of the following:
at least one of a discontinuous reception cycle, a start offset of the discontinuous reception cycle and a slot offset of the discontinuous reception cycle in the first configuration information for different users is the same;
a starting symbol position of the terminal device's discontinuous reception cycle determined by the first configuration information is aligned with a starting symbol position of the network device's discontinuous transmission cycle determined by the second configuration information;
active time of the discontinuous reception cycle determined by the first configuration information for different users falls within a discontinuous transmission active time determined by the second configuration information;
a duration of the discontinuous reception cycle in the first configuration information for different users is longer than or equal to a duration of the discontinuous transmission cycle in the second configuration information;
at least one of a duration timer, inactivity timer, downlink hybrid automatic repeat request round trip timer, uplink hybrid automatic repeat request round trip timer, downlink retransmission timer, and uplink retransmission timer in the first configuration information for different users is different;
the first configuration information and/or the second configuration information are configured by an RRC message;
the first configuration information and the second configuration information are activated by the same DCI field;
the first configuration information and the second configuration information are activated by different DCI fields;
the first configuration information and the second configuration information are activated by the same MAC CE; and
the first configuration information and the second configuration information are activated by different MAC CEs.

The embodiment of the present application further provides a processing device, which is applied to a network device or is a network device, and the device includes a transmitting module.

The transmitting module is configured for transmitting first configuration information and/or second configuration information, so that a terminal device determines whether to transmit uplink service data and/or reference signals, or whether to receive downlink service data and/or reference signals according to the first configuration information and/or second configuration information.

Optionally, the second configuration information includes at least one of second discontinuous transmission and reception configuration information, second downlink discontinuous transmission configuration information, and second uplink discontinuous reception configuration information; and/or different power states correspond to different or same second configuration information.

Optionally, the device further includes at least one of the following:
a cycle of the second downlink discontinuous transmission configuration information is equal to a cycle of the second uplink discontinuous reception configuration information;
active time of the second uplink discontinuous reception configuration information comprises uplink service transmission duration configured in the last downlink control information carrying uplink scheduling information within the second downlink discontinuous reception configuration information; and
a starting symbol position of the second downlink discontinuous transmission configuration information is aligned with a starting symbol position of the second uplink discontinuous reception configuration information.

Optionally, the device further includes at least one of the following:
at least one of a discontinuous reception cycle, a start offset of the discontinuous reception cycle and a slot offset of the discontinuous reception cycle in the first configuration information for different users is the same;
a starting symbol position of the terminal device's discontinuous reception cycle determined by the first configuration information is aligned with a starting symbol position of the network device's discontinuous transmission cycle determined by the second configuration information;
active time of the discontinuous reception cycle determined by the first configuration information for different users falls within a discontinuous transmission active time determined by the second configuration information;
a duration of the discontinuous reception cycle in the first configuration information for different users is longer than or equal to a duration of the discontinuous transmission cycle in the second configuration information;
at least one of a duration timer, inactivity timer, downlink hybrid automatic repeat request round trip timer, uplink hybrid automatic repeat request round trip timer, downlink retransmission timer, and uplink retransmission timer in the first configuration information for different users is different;
the first configuration information and/or the second configuration information are configured by an RRC message;
the first configuration information and the second configuration information are activated by the same DCI field;
the first configuration information and the second configuration information are activated by different DCI fields;
the first configuration information and the second configuration information are activated by the same MAC CE; and
the first configuration information and the second configuration information are activated by different MAC CEs.

The embodiment of the present application also provides a communication system, including the terminal device described in any of the above embodiments, and the network device described in any of the above embodiments.

The embodiment of the present application also provides a communication device, including: a memory, a processor, and a processing program stored in the memory and executable on the processor, and the processing program is executed by the processor to implement the processing method described in any of the above embodiments. The communication device mentioned in the present application can be a terminal device (such as a smart terminal, such as a mobile phone) or a network device (such as a base station). The specific reference needs to be clarified in the context.

The present application also provides a storage medium on which a computer program is stored. When the computer program is executed by a processor, the processing method described in any of the above embodiments is implemented.

In the embodiments of the communication device and storage medium provided in the present application, all technical features of any of the above processing method embodiments may be included. The expansion and explanation of the specification are basically the same as the embodiments of the above methods, and will not be repeated here.

The embodiment of the present application also provides a computer program product, which includes a computer program code. When the computer program code is run on a computer, the computer executes the method in the above various possible implementations.

The embodiment of the present application also provides a chip, including a memory and a processor, the memory is used to store a computer program, and the processor is used to call and run the computer program from the memory, so that the device equipped with the chip executes the method in the above various possible implementations.

It can be understood that the above-mentioned scenarios are only examples and do not constitute a limitation on the application scenarios of the technical solutions provided in the embodiments of the present application. The technical solutions of the present application can also be applied to other scenarios. For example, it is known to ordinary technicians in the field that with the evolution of the system architecture and the emergence of new business scenarios, the technical solutions provided in the embodiments of the present application are also applicable to similar technical problems.

The serial numbers of the embodiments of the present application are for description only and do not represent the advantages and disadvantages of the embodiments.

The steps in the method of the embodiment of the present application can be adjusted in order, merged and deleted according to actual needs.

The units in the device of the embodiment of the present application can be merged, divided and deleted according to actual needs.

In the present application, the same or similar terminology, technical solution and/or application scenario description is generally described in detail only when it appears for the first time. When it appears again later, it is generally not repeated for the sake of brevity. When understanding the technical solution and other contents of the present application, for the same or similar terminology, technical solution and/or application scenario description that is not described in detail later, please refer to the previous related detailed description.

In the present application, the descriptions of various embodiments have different focuses. For parts that are not described or denoted in a certain embodiment, please refer to the relevant descriptions of other embodiments.

The various technical features of the technical solution of the present application can be combined arbitrarily. In order to make the description concise, all possible combinations of the various technical features in the above embodiments are not described. However, as long as there is no contradiction in the combination of these technical features, they should be considered to fall within the scope of the present application.

Through the above description of the implementation, those skilled in the art can clearly understand that the above embodiment methods can be implemented by software plus the necessary general hardware platform, or by hardware, but in many cases the former is a better implementation. Based on this understanding, the technical solution of the present application essentially or the part that contributes to the existing technology can be embodied in the form of a software product, and the computer software product is stored in one of the above storage media (such as ROM/RAM, disk, optical disk), including several instructions to cause a terminal device (which can be a mobile phone, a computer, a server, a controlled terminal, or a network device, etc.) to execute the method of each embodiment of the present application.

The above embodiments can be implemented in whole or in part by software, hardware, firmware or any combination thereof. When implemented by software, it can be implemented in whole or in part in the form of a computer program product. The computer program product includes one or more computer instructions. When the computer program instructions are loaded and executed on the computer, the process or function according to the embodiment of the present application is generated in whole or in part. The computer can be a general-purpose computer, a special-purpose computer, a computer network, or other programmable device. The computer instructions can be stored in a computer-readable storage medium, or transmitted from one computer-readable storage medium to another computer-readable storage medium. For example, the computer instructions can be transmitted from one website, computer, server or data center to another website, computer, server or data center by wired (such as coaxial cable, optical fiber, digital subscriber line (DSL)) or wireless (such as infrared, wireless, microwave, etc.) means. The computer-readable storage medium can be any available medium that can be accessed by the computer or a data storage device such as a server or data center that includes one or more available media integrated. The available medium can be a magnetic medium (such as a floppy disk, a storage disk, a tape), an optical medium (such as a DVD), or a semiconductor medium (such as a Solid State Disk (SSD)), etc.

The above are only some embodiments of the present application, and are not intended to limit the scope of the present application. Any equivalent structure or equivalent process transformation made using the contents of the specification and drawings of the present application, or directly or indirectly applied in other related technical fields, shall be similarly included in the scope of the present application.

## Claims

1. A processing method, **characterized by** comprising following step:
S20, determining whether to transmit uplink service data and/or reference signals, or whether to receive downlink service data and/or reference signals, according to first configuration information and/or second configuration information.

2. The method according to claim 1, wherein the second configuration information comprises at least one of second discontinuous transmission and reception configuration information, second downlink discontinuous transmission configuration information, and second uplink discontinuous reception configuration information; and/or different power states of a network device correspond to different or same second configuration information.

3. The method according to claim 2, wherein the step S20 comprises at least one of the following:
when the second configuration information is the second discontinuous transmission and reception configuration information, not transmitting or receiving service data and/or reference signals during inactive time of the second configuration information;
when the second configuration information is the second downlink discontinuous transmission configuration information, not receiving downlink service data and/or reference signals during the inactive time of the second configuration information; and
when the second configuration information is the second uplink discontinuous reception configuration information, not transmitting uplink service data and/or reference signals during the inactive time of the second configuration information.

4. The method according to claim 2, further comprising at least one of the following:
a cycle of the second downlink discontinuous transmission configuration information is equal to a cycle of the second uplink discontinuous reception configuration information;
active time of the second uplink discontinuous reception configuration information comprises uplink service transmission duration configured in the last downlink control information carrying uplink scheduling information within the second downlink discontinuous reception configuration information; and
a starting symbol position of the second downlink discontinuous transmission configuration information is aligned with a starting symbol position of the second uplink discontinuous reception configuration information.

5. The method according to any one of claims 1 to 4, further comprising at least one of the following:
at least one of a discontinuous reception cycle, a start offset of the discontinuous reception cycle and a slot offset of the discontinuous reception cycle in the first configuration information for different users is the same;
a starting symbol position of the terminal device's discontinuous reception cycle determined by the first configuration information is aligned with a starting symbol position of the network device's discontinuous transmission cycle determined by the second configuration information;
active time of the discontinuous reception cycle determined by the first configuration information for different users falls within a discontinuous transmission active time determined by the second configuration information;
a duration of the discontinuous reception cycle in the first configuration information for different users is longer than or equal to a duration of the discontinuous transmission cycle in the second configuration information;
at least one of a duration timer, inactivity timer, downlink hybrid automatic repeat request round trip timer, uplink hybrid automatic repeat request round trip timer, downlink retransmission timer, and uplink retransmission timer in the first configuration information for different users is different;
the first configuration information and/or the second configuration information are configured by an RRC message;
the first configuration information and the second configuration information are activated by the same DCI field;
the first configuration information and the second configuration information are activated by different DCI fields;
the first configuration information and the second configuration information are activated by the same MAC CE; and
the first configuration information and the second configuration information are activated by different MAC CEs.

6. A processing method, **characterized by** comprising following step:
S10, transmitting first configuration information and/or second configuration information, so that a terminal device determines whether to transmit uplink service data and/or reference signals, or whether to receive downlink service data and/or reference signals according to the first configuration information and/or second configuration information.

7. The method according to claim 6, wherein the second configuration information comprises at least one of second discontinuous transmission and reception configuration information, second downlink discontinuous transmission configuration information, and second uplink discontinuous reception configuration information; and/or different power states correspond to different or same second configuration information.

8. The method according to claim 7, further comprising at least one of the following:
a cycle of the second downlink discontinuous transmission configuration information is equal to a cycle of the second uplink discontinuous reception configuration information;
active time of the second uplink discontinuous reception configuration information comprises uplink service transmission duration configured in the last downlink control information carrying uplink scheduling information within the second downlink discontinuous reception configuration information; and
a starting symbol position of the second downlink discontinuous transmission configuration information is aligned with a starting symbol position of the second uplink discontinuous reception configuration information.

9. The method according to any one of claims 6 to 8, further comprising at least one of the following:
at least one of a discontinuous reception cycle, a start offset of the discontinuous reception cycle and a slot offset of the discontinuous reception cycle in the first configuration information for different users is the same;
a starting symbol position of the terminal device's discontinuous reception cycle determined by the first configuration information is aligned with a starting symbol position of the network device's discontinuous transmission cycle determined by the second configuration information;
active time of the discontinuous reception cycle determined by the first configuration information for different users falls within a discontinuous transmission active time determined by the second configuration information;
a duration of the discontinuous reception cycle in the first configuration information for different users is longer than or equal to a duration of the discontinuous transmission cycle in the second configuration information;
at least one of a duration timer, inactivity timer, downlink hybrid automatic repeat request round trip timer, uplink hybrid automatic repeat request round trip timer, downlink retransmission timer, and uplink retransmission timer in the first configuration information for different users is different;
the first configuration information and/or the second configuration information are configured by an RRC message;
the first configuration information and the second configuration information are activated by the same DCI field;
the first configuration information and the second configuration information are activated by different DCI fields;
the first configuration information and the second configuration information are activated by the same MAC CE; and
the first configuration information and the second configuration information are activated by different MAC CEs.

10. A communication device, **characterized by** comprising: a memory, a processor, wherein a processing program is stored on the memory, and when the processing program is executed by the processor, the processing method according to claim 1 or 6 is implemented.

11. A storage medium, **characterized in that** a computer program is stored on the storage medium, and when the computer program is executed by a processor, the processing method according to claim 1 or 6 is implemented.
